(19) Europäisches Patentamt
European Patent Office
Office européen des brevets

(11) EP 4 310 110 A1

(12) EUROPEAN PATENT APPLICATION
published in accordance with Art. 153(4) EPC

(43) Date of publication:
24.01.2024 Bulletin 2024/04

(21) Application number: 22771389.8

(22) Date of filing: 14.03.2022

(51) International Patent Classification (IPC):
*C08F 8/04* (2006.01) *B60C 1/00* (2006.01)
*C08F 8/30* (2006.01) *C08F 36/06* (2006.01)
*C08K 3/013* (2018.01) *C08L 9/00* (2006.01)

(52) Cooperative Patent Classification (CPC):
**B60C 1/00; C08F 8/04; C08F 8/30; C08F 36/06; C08K 3/013; C08L 9/00;** Y02T 10/86

(86) International application number:
PCT/JP2022/011366

(87) International publication number:
WO 2022/196643 (22.09.2022 Gazette 2022/38)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 15.03.2021 JP 2021041264

(71) Applicant: ENEOS Materials Corporation
Tokyo 105-0021 (JP)

(72) Inventors:
- NAKAHAMA, Tatsumoto
Tokyo 105-8640 (JP)
- KIKUCHI, Toshimitsu
Tokyo 105-8640 (JP)
- SENGA, Hirofumi
Tokyo 105-8640 (JP)
- SANO, Takuya
Tokyo 105-8640 (JP)
- FUKUMOTO, Takato
Tokyo 105-8640 (JP)
- SAKAGAMI, Yuto
Tokyo 105-8640 (JP)
- HAYAKAWA, Toshiyuki
Tokyo 105-8640 (JP)

(74) Representative: TBK
Bavariaring 4-6
80336 München (DE)

# (54) CONJUGATED DIENE POLYMER AND METHOD FOR PRODUCING SAME, POLYMER COMPOSITION, CROSSLINKED PRODUCT, AND TIRE

(57) A conjugated diene-based polymer has a value $\alpha$ defined by mathematical expression (i) of 0.65 to 0.97. p, q, r, and s represent compositional ratios (mole ratios) of the structural units represented by formulas (1) to (4) respectively in the polymer. The conjugated diene-based polymer includes, in an amount of 25 to 75 mass%, polymer (A1) which has a multi-branched structure having 4 or more molecular chains. The polymer (A1) has a functional group containing at least one element selected from the group consisting of nitrogen, oxygen, and sulfur at one or both of a terminal and a branching point of the polymer (A1).

$$\alpha=(p+(0.5\times r))/(p+q+(0.5\times r)+s) \quad \cdots \quad (i)$$

EP 4 310 110 A1

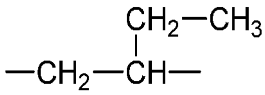

(1)

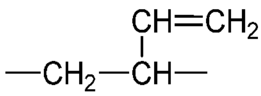

(2)

$$-CH_2-CH_2-$$

(3)

$$-CH_2-CH=CH-CH_2-$$

(4)

## Description

Cross-Reference to Related Applications

The present application claims the benefit of Japanese Patent Application No. 2021-41264 filed March 15, 2021, the disclosure of which is incorporated herein by reference.

Technical Field

The present disclosure relates to a conjugated diene-based polymer and a method for producing the same, to a polymer composition, to a cross-linked product, and to a tire.

Background Art

Conjugated diene-based polymers, which are produced through polymerization of a conjugated diene compound, exhibit excellent properties such as high heat resistance, high wear resistance, high mechanical strength, and good moldability, and find wide uses as industrial products including pneumatic tires, rubber vibration isolators, and rubber hoses.

Polymer compositions for producing parts of pneumatic tires such as tread and sidewall employ a conjugated diene-based polymer. In order to enhance durability and wear resistance of such rubber products, reinforcing inorganic fillers such as carbon black and silica are conventionally incorporated into the polymer compositions. Also conventionally, a conjugated diene-based polymer which has been modified with a silicon- or nitrogen-containing compound is used for enhancing compatibility between a conjugate diene-based polymer and a reinforcing material (see, for example, Patent Documents 1 to 3).

Meanwhile, in recent years, there has been proposed use of a hydrogenation product of a conjugated diene-based polymer having a functional group such as an amino group or an alkoxysilyl group at one or both terminals for yielding a tire member exhibiting excellent mechanical strength and wear resistance (see Patent Document 4).

Prior Art Documents

Patent Documents

Patent Document 1: WO 2008/123164
Patent Document 2: Japanese Patent Application Laid-Open (kokai) No. 1999-349632
Patent Document 3: WO 2017/221943
Patent Document 4: WO 2014/133097

Summary of the Invention

Problems to be Solved by the Invention

Under recent environmental conditions, active trends for saving of material and energy, and other conditions, there are desired prolongation of service life of rubber products (i.e., prolongation of durability), and reduction in weight and size of rubber products while their performances are maintained. Thus, there is demand for a material which can provide a cross-linked product (i.e., vulcanized rubber) exhibiting excellent wear resistance and a mechanical strength which is higher than that which has conventionally been attained.

However, wear resistance and mechanical strength are generally inconsistent with processability. If one performance is to be improved, the counter performance tends to decrease. Thus, in order to provide high-performance rubber products (e.g., tires), all these properties must be satisfied.

In the case where the solution of a polymer has high viscosity, flowability of the polymer solution decreases. As a result, smooth transfer of the polymer solution to a container via a pipe may fail to be achieved, and diffusion of hydrogen may be impeded in the polymer solution during hydrogenation, thereby prolonging the time required for hydrogenation. In such cases, sufficient productivity may conceivably fail to be secured.

The present disclosure has been established so as to solve the aforementioned problems. Thus, an object of the invention is to provide a conjugated diene-based polymer which can achieve an improved balance between the mechanical strength and wear resistance of the cross-linked product and the processability of the polymer composition

and which has a suitably low solution viscosity.

Means for Solving the Problems

According to the present disclosure, there are provided the conjugated diene-based polymer and the production method therefor, the polymer composition, the cross-linked product, and the tire which are described below.

[1] A conjugated diene-based polymer which has a value α defined by the following mathematical expression (i):

$$\alpha=(p+(0.5\times r))/(p+q+(0.5\times r)+s) \quad \cdots \quad (i);$$

of 0.65 to 0.97, wherein p, q, r, and s represent compositional ratios (mole ratios) of the structural units represented by the following formulas (1) to (4), respectively:

[F1]

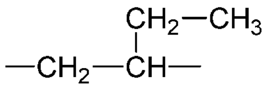

(1)

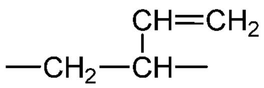

(2)

$—CH_2—CH_2—$

(3)

$—CH_2—CH=CH—CH_2—$

(4)

;

in the polymer, wherein

the conjugated diene-based polymer contains, in an amount of 25 to 75 mass%, polymer (A1) which has a multi-branched structure having 4 or more molecular chains; and
the polymer (A1) has a functional group containing at least one element selected from the group consisting of nitrogen, oxygen, and sulfur at one or both of a terminal and a branching point of the polymer (A1).

[2] A method for producing a conjugated diene-based polymer, the method including:

a polymerization step of polymerizing a monomer including a conjugated diene compound in the presence of a metallic compound containing an alkali metal or an alkaline earth metal, to thereby yield conjugated diene-based polymer (I) having an active terminal;
a reaction step of reacting the conjugated diene-based polymer (I) with compound [B] having 4 or more functional groups which can react with the active terminal, to thereby yield conjugated diene-based polymer (II); and
a hydrogenation step of performing hydrogenation, so that the hydrogenation ratio of structural units derived from the conjugated diene compound included in the conjugated diene-based polymer (II) is adjusted to 65 to 970, wherein
the reaction step is a step of reacting the conjugated diene-based polymer (I) with the compound [B], so that the conjugated diene-based polymer (II) contains a polymer having a multi-branched structure having 4 or more molecular chains in an amount of 25 to 75 mass%; and
at least one species of the metallic compound and the compound [B] contains at least one element selected from the group consisting of nitrogen, oxygen, and sulfur.

[3] A polymer composition containing the conjugated diene-based polymer as described [1] above or the conjugated diene-based polymer produced through the production method as described [2] above; and an inorganic filler.
[4] A cross-linked product formed by cross-linking the polymer composition as described [3] above.
[5] A tire having a tread and a sidewall, wherein one or both of the tread and the sidewall is formed by use of the polymer composition as described [3] above.

Advantageous Effects of the Invention

By use of the conjugated diene-based polymer of the present disclosure, a cross-linked product of the polymer exhibiting high mechanical strength and excellent wear resistance can be provided. Also, the conjugated diene-based polymer of the present disclosure exhibits a suitably low solution viscosity and excellent productivity. Further, according to the present disclosure, there can be provided a cross-linked product which exhibits high mechanical strength and excellent wear resistance and a polymer composition which has excellent processability (particularly, Mooney viscosity and cold flow characteristics).

Description of the Embodiments

Hereinafter, modes for carrying out the present disclosure will be described in detail. Notably, in the present specification, a numerical range expressed with "X to Y" refers to a range defined by X as a lower limit and Y as an upper limit.

<<Conjugated diene-based polymer [A]>>

The conjugated diene-based polymer of the present disclosure (hereinafter may also be referred to as "conjugated diene-based polymer [A]") has a value $\alpha$ defined by the following mathematical expression (i):

$$\alpha=(p+(0.5\times r))/(p+q+(0.5\times r)+s) \quad \cdots \quad (i);$$

of 0.65 to 0.97, wherein p, q, r, and s represent the compositional ratios (mole ratios) of the structural units represented by the following formulas (1) to (4), respectively:

[F2]

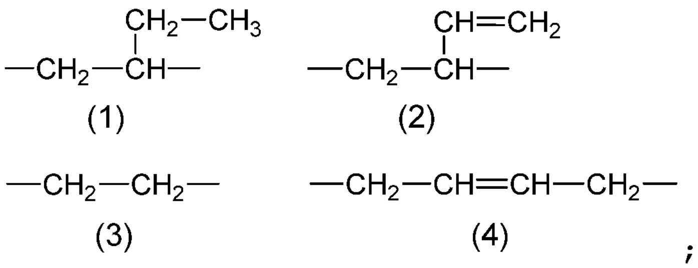

(1) (2) (3) (4) ;

in the polymer.

Conjugated diene-based polymer [A] is an integrated polymer having structural units derived from a conjugated diene compound and includes a polymer having a branched structure (i.e., a branched polymer). More specifically, conjugated diene-based polymer [A] contains polymer (A1) in an amount of 25 to 75 mass% with respect to the entire amount (100 mass%) of conjugated diene-based polymer [A], wherein polymer (A1) is a branched polymer having a multi-branched structure having 4 or more molecular chains. Polymer (A1) has at least one element selected from the group consisting of nitrogen, oxygen, and sulfur (hereinafter may also be referred to as a "particular element") at one or both a terminal and a branching point. Such conjugated diene-based polymer [A] may be produced through a method including the following polymerization step, reaction step, and hydrogenation step. Notably, when polymer (A1) has a particular element at a terminal, polymer (A1) may have particular elements at all the terminals (i.e., free terminals), or at part of the terminals. The term "branching point" of the branched polymer refers to a diverging point of molecular chains. In other words, the branching point is a terminal opposite the free terminal of each molecular chain (i.e., a fixed terminal). Hereinafter, the method for producing conjugated diene-based polymer [A] as well as the compositional feature of conjugated diene-based polymer [A] will be described.

<Polymerization step>

In the polymerization step, a monomer including conjugated diene compound is polymerized, to thereby form a conjugated diene-based polymer having active terminals (hereinafter may also be referred to as "conjugated diene-based polymer (I)"). The conjugated diene-based polymer (I) has structural units derived from the conjugated diene compound and is an integrated polymer having active terminals. Examples of the conjugated diene compound involved in the polymerization step include 1,3-butadiene, isoprene, 2,3-dimethyl-1,3-butadiene, 1,3-pentadiene, 1,3-hexadiene, 1,3-heptadiene, 2-phenyl-1,3-butadiene, 3-methyl-1,3-pentadiene, and 2-chloro-1,3-butadiene. Among them, at least one species selected from the group consisting of 1,3-butadiene, isoprene, and 2,3-dimethyl-1,3-butadiene is preferred, with at least one of 1,3-butadiene and isoprene being more preferred.

Conjugated diene-based polymer [A] may be a homopolymer of a conjugated diene compound. From the viewpoint of providing a cross-linked product with higher mechanical strength, conjugated diene-based polymer [A] is preferably a copolymer formed of a structural unit derived from a conjugated diene compound and a structural unit derived from an aromatic vinyl compound. Examples of the aromatic vinyl compound used in polymerization include styrene, 2-methylstyrene, 3-methylstyrene, 4-methylstyrene, $\alpha$-methylstyrene, 2,4-dimethylstyrene, 2,4-diisopropylstyrene, 4-t-butylstyrene, 5-t-butyl-2-methylstyrene, vinylethylbenzene, divinylbenzene, trivinylbenzene, divinylnaphthalene, t-butoxystyrene, vinylbenzyldimethylamine, (4-vinylbenzyl) dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, vinylxylene, vinylnaphthalene, vinylpyridine, diphenylethylene, and tertiary amino group-containing diphenylethylene (for example, 1-(4-N,N-dimethylaminophenyl)-1-phenylethylene). As the aromatic vinyl compound, among these, styrene and $\alpha$-methylstyrene are preferable.

When conjugated diene-based polymer [A] is a copolymer of a conjugated diene compound and an aromatic vinyl compound, a copolymer formed from monomers including 1,3-butadiene and styrene is preferred, from the viewpoint of high living property in anionic polymerization. The copolymer preferably has a random copolymer segment in which conjugated diene compound units and aromatic vinyl compound units are present at random, from the viewpoint of achieving suitable dispersion of inorganic fillers. When conjugated diene-based polymer [A] is a random copolymer of a conjugated diene compound and an aromatic vinyl compound, conjugated diene-based polymer [A] may further include a block segment of conjugated diene compound units and aromatic vinyl compound units, in addition to the random copolymer segment.

When conjugated diene-based polymer [A] is a copolymer of a conjugated diene compound and an aromatic vinyl compound, the relative amount of structural units derived from an aromatic vinyl compound in conjugated diene-based polymer [A] is preferably more than 0 mass% and 45 mass% or less, with respect to all the structural units forming conjugated diene-based polymer [A]. By adjusting the relative amount to fall within the above range, a cross-linked product exhibiting higher mechanical strength and excellent wear resistance can be yielded, while processability of the polymer composition is maintained. In addition, the viscosity of the polymer solution can be sufficiently reduced. These features are advantageous. Further, in order to enhance the mechanical strength of the cross-linked product while the viscosity of the polymer solution is maintained at a sufficiently low level, and to attain suitable cold flow characteristics, the relative amount of structural units derived from an aromatic vinyl compound is more preferably 2 mass% or more, still more preferably 5 mass% or more, with respect to all the structural units forming conjugated diene-based polymer [A]. Also, from the viewpoints of reducing the Mooney viscosity of the polymer and suppressing a drop in wear resistance of the cross-linked product, the relative amount of structural units derived from an aromatic vinyl compound is more preferably 40 mass% or less, still more preferably 38 mass% or less, yet more preferably 35 mass% or less, with respect to all the structural units forming conjugated diene-based polymer [A].

Notably, the relative amount of the structural units derived from an aromatic vinyl compound in the polymer is determined through $^1$H-NMR. Regarding the conjugated diene compound and the aromatic vinyl compound, the individual compounds may be used singly or in combination of two or more species.

The monomer used in polymerization reaction to form conjugated diene-based polymer [A] may include a compound other than a conjugated diene compound and an aromatic vinyl compound (hereinafter may also be referred to as an "additional monomer"). Examples of the additional monomer include acrylonitrile, methyl (meth)acrylate, and ethyl (meth)acrylate. The amount of the additional monomer used is preferably 10 mass% or less, more preferably 5 mass% or less, with respect to the total amount of the monomers involved in polymerization.

The polymerization method used may be any of a solution polymerization method, a gas phase polymerization method, and a bulk polymerization method. Among these, a solution polymerization method is particularly preferable. Further, as the polymerization type, either a batch type or a continuous type may be used. When a solution polymerization method is used, an example of a specific polymerization method is a method in which polymerization is conducted with a monomer including the conjugated diene compound in an organic solvent in the presence of a polymerization initiator and, optionally, a randomizer (i.e., a vinyl content adjusting agent).

As the polymerization initiator, a metallic compound containing an alkali metal or an alkaline earth metal may be used. Among such metallic compounds, an alkali metal-containing compound is preferred. Specific examples of the metallic compound include alkyl lithium such as methyllithium, ethyllithium, n-propyllithium, n-butyllithium, sec-butyllithium, and t-butyllithium; 1,4-dilithiobutane, phenyllithium, stilbene lithium, naphthyllithium, 1,3-bis(1-lithio-1,3-dimethylpentyl)benzene, 1,3-phenylenebis(3-methyl-1-phenyl pentylidene)dilithium, naphthyl sodium, naphthyl potassium, and

ethoxypotassium. Among these, the polymerization initiator is preferably a lithium compound.

Alternatively, the metallic compound used as the polymerization initiator may be a metal amide compound containing an alkali metal or an alkaline earth metal. When polymerization for forming conjugated diene-based polymer [A] is conducted in the presence of a metal amide compound, an amino group (preferably a secondary amino group or a tertiary amino group) can be attached to a polymerization initiating terminal (more specifically, a free terminal of the branched polymer) of the conjugated diene-based polymer. Conjugated diene-based polymer [A] formed through polymerization in the presence of a metal amide compound is preferred, from the viewpoints of achieving high mechanical strength and excellent wear resistance of the cross-linked product and processability of the polymer composition in a well-balanced manner.

Among metal amide compounds, a compound obtained by mixing a lithium compound (e.g., alkyllithium) with a compound containing a nitrogen atom (hereinafter may also be referred to as an "initiating terminal modifier") is preferred. The initiating terminal modifier is preferably a secondary amine compound. Examples of the secondary amine compound include dimethylamine, diethylamine, dipropylamine, dibutylamine, dodecamethyleneimine, N,N'-dimethyl-N'-trimethylsilyl-1,6-diaminohexane, piperidine, pyrrolidine, hexamethyleneimine, heptamethyleneimine, dicyclohexylamine, N-methylbenzylamine, di-(2-ethylhexyl)amine, diallylamine, morpholine, N-(trimethylsilyl)piperazine, N-(tertbutyldimethylsilyl)-4-piperazine, and 1,3-ditrimethylsilyl-1,3,5-triazinane.

Notably, when polymerization is conducted in the presence of a metal amide compound, a lithium compound and an initiating terminal modifier may be mixed together in advance, to thereby prepare a metal amide compound, and the thus-prepared metal amide compound may be added to the polymerization system for conducting polymerization. Alternatively, both a lithium compound and an initiating terminal modifier may be added to the polymerization system, and the two components may be mixed in the polymerization system, to thereby prepare a metal amide compound for conducting polymerization. In the above polymerization, the amount of polymerization initiator (the total amount, when two or more species are used) is preferably 0.01 to 20 mmol, more preferably 0.05 to 15 mmol, with respect to 100 g of the monomer involved in synthesis of the polymer.

The randomizer may be used for the purpose of adjusting the vinyl bond content that represents the content rate of vinyl bonds in a polymer. Examples of the randomizer include dimethoxybenzene, tetrahydrofuran, dimethoxyethane, diethylene glycol dibutyl ether, diethylene glycol dimethyl ether, 2,2-di(tetrahydrofuryl)propane, 2-(2-ethoxyethoxy)-2-methylpropane, triethylamine, pyridine, N-methylmorpholine, tetramethylethylenediamine, and potassium dodecylbenzenesulfonate. The randomizer may be used singly or in combination of two or more species.

The organic solvent used for polymerization may be any organic solvent that is inert to the reaction. Examples of the organic solvent include linear or cyclic aliphatic hydrocarbons and aromatic hydrocarbons. Among these, the organic solvent is preferably a C3 to C8 hydrocarbon. Specific examples of the C3 to C8 hydrocarbon include propane, n-butane, isobutane, n-pentane, isopentane, n-hexane, cyclohexane, propene, 1-butene, isobutene, trans-2-butene, cis-2-butene, 1-hexene, 2-hexene, benzene, toluene, xylene, ethylbenzene, heptane, cyclopentane, methylcyclopentane, methylcyclohexane, 1-pentene, 2-pentene, and cyclohexene. These organic solvents may be used singly or in combination of two or more species.

When the solution polymerization is used, the monomer concentration of the reaction solvent is preferably 5 to 50 mass%, more preferably 10 to 30 mass%, from the viewpoint of maintaining the balance between productivity and polymerization controllability. The polymerization reaction temperature is preferably -20°C to 150°C, more preferably 0 to 120°C. The polymerization reaction is preferably performed under a pressure sufficient to maintain the monomer substantially in a liquid phase. Such a pressure can be achieved by, for example, pressurizing the reactor by use of a gas employed inert to the polymerization reaction. Conjugated diene-based polymer (I) having an active terminal can be obtained by such a polymerization reaction.

In conjugated diene-based polymer (I) formed through the above polymerization procedure, the vinyl bond content of the structural units derived from 1,3-butadiene is preferably 15 to 85 mol%. By tuning the vinyl bond content to 15 mol% or greater, the formed cross-linked product maintains its flexibility, and excellent processability is secured. In addition, wear resistance in a low-slip region is likely to be enhanced. Further, the viscosity and Mooney viscosity of the polymer solution can be sufficiently reduced. The vinyl bond content of conjugated diene-based polymer (I) is preferably 18 mol% or more, more preferably 20 mol% or more. From another aspect, the vinyl bond content of conjugated diene-based polymer (I) is preferably 78 mol% or less, more preferably 65 mol% or less, from the viewpoints of durability of the cross-linked product obtained from conjugated diene-based polymer [A] and cold flow characteristics. As used herein, the term "vinyl bond content" refers to a ratio of structural units having a 1,2-bond to all the structural units derived from 1,3-butadiene in the conjugated diene-based polymer before hydrogenation. The ratio is determined by means of a $^{1}H$-NMR apparatus.

<Reaction step>

In this step, conjugated diene-based polymer (I) obtained through the above polymerization step is caused to be reacted with a compound having 4 or more functional groups which can react with active terminals of conjugated diene-based polymer (I) (hereinafter may also be referred to as a "coupling agent [B]" or "compound [B]"), to thereby

produce conjugated diene-based polymer (II). Conjugated diene-based polymer (II) is an integrated polymer having structural units derived from a conjugated diene compound.

No particular limitation is imposed on coupling agent [B] used in the production of conjugated diene-based polymer [A], so long as the agent has 4 or more reaction points to active terminals of the conjugated diene-based polymer. Among such compounds, a compound having at least one element selected from the group consisting of nitrogen, oxygen, sulfur, and silicon is preferably used as coupling agent [B]. Use of a compound having the aforementioned particular element as coupling agent [B] is preferred, since a cross-linked product achieving mechanical strength and wear resistance thereof and processability (more specifically, Mooney viscosity and cold flow) of the polymer composition can be improved in a well-balanced manner.

Specific examples of coupling agent [B] include silicon-containing compounds such as tetrachlorosilane (silicon tetrachloride), tetramethoxysilane, and bis(trichlorosilyl)ethane.

Also, as coupling agent [B], a compound which has functional group F containing at least one element selected from the group consisting of nitrogen, oxygen, and sulfur (particular element) and which has 4 or more reaction sites with polymer chains obtained in the aforementioned polymerization step (hereinafter may also be referred to as a "terminal modifier (b1)") may also be used. By use of terminal modifier (b1), a branched polymer having functional group F at a branching point can be yielded.

Specific examples of functional group F include a primary amino group, a secondary amino group, a tertiary amino group, a protected primary amino group, a protected secondary amino group, an imino group, a nitrogen-containing heterocyclic group (e.g., a group having a heterocycle such as a pyridine ring or an imido ring), a hydroxyl group, a protected hydroxyl group, a thiol group, a protected thiol group, and a hydrocarbyloxysilyl group. Among them, functional group F is preferably a nitrogen-containing functional group, from the viewpoint of high effect of improving wear resistance. Particularly preferably, functional group F includes at least one species selected from the group consisting of a primary amino group, a secondary amino group, a tertiary amino group, and an imino group.

As terminal modifier (b1), at least one compound selected from the group consisting of the compounds represented by formulas (5) and (6) may be suitably used.

[F3]

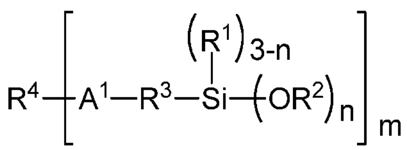

(5)

(In formula (5), each of $R^1$ and $R^2$ independently represents a C1 to C20 hydrocarbyl group; $R^3$ represents a C1 to C20 alkanediyl group; $A^1$ represents group *-C($R^5$)=N- or group *-N=C($R^5$)- (wherein $R^5$ represents a hydrogen atom or a hydrocarbyl group, and "*" represents a chemical bond connectable to $R^4$); $R^4$ represents a C1 to C20 m-valent hydrocarbyl group or a C1 to C20 m-valent group which has at least one element selected from the group consisting of nitrogen, oxygen, and sulfur and in which no active hydrogen is bonded to the element; n is an integer of 1 to 3; m is an integer of 2 to 10; a plurality of $R^1$, $R^2$, $R^3$, $A^1$, and n in the formula each are identical to or different from one another; and the sum of a plurality of ns is m+4 or more, when m is 2 or 3.)

[F4]

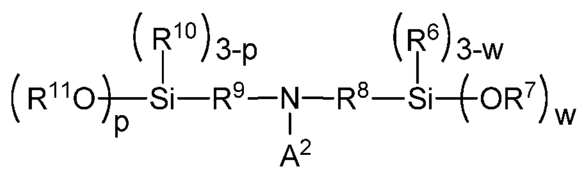

(6)

(In formula (6), each of $R^6$, $R^7$, $R^{10}$, and $R^{11}$ independently represents a C1 to C20 hydrocarbyl group; each of $R^8$ and $R^9$ independently represents a C1 to C20 alkanediyl group; $A^2$ represents a group represented by formula (7), (8), (9), or (10); each of w and p is independently an integer of 1 to 3; each of w and p is 3, when $A^2$ is represented by formula (9) or (10); and a plurality of $R^6$, $R^7$, $R^{10}$, and $R^{11}$ in the formula each are identical to or different from one another.)

[F5]

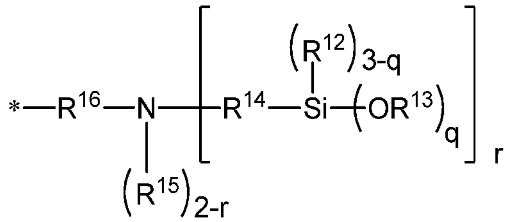

(7)

(In formula (7), each of $R^{12}$, $R^{13}$, and $R^{15}$ independently represents a C1 to C20 hydrocarbyl group; each of $R^{14}$ and $R^{16}$ independently represents a C1 to C20 alkanediyl group; q is an integer of 1 to 3; r is an integer of 0 to 2; a plurality of $R^{12}$ to $R^{15}$ in the formula each are identical to or different from one another; a plurality of qs are numbers identical to or different from one another; the number generated by subtracting r from the sum of p, w, and q is 6 or more; and "*" represents a chemical bond connectable to the nitrogen atom in formula (6).)

[F6]

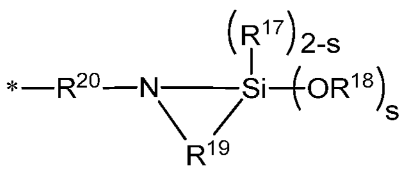

(8)

(In formula (8), $R^{19}$ represents a C3 to C20 alkanediyl group, and forms a ring structure of 5 or more members together with the nitrogen atom and the silicon atom in the formula; each of $R^{17}$ and $R^{18}$ independently represents a C1 to C20 hydrocarbyl group; $R^{20}$ represents a C1 to C20 alkanediyl group; s is 1 or 2; a plurality of $R^{17}$ and $R^{18}$ in the formula each are identical to or different from one another; the sum of p, w, and s is 7 or more; and "*" represents a chemical bond connectable to the nitrogen atom in formula (6).)

[F7]

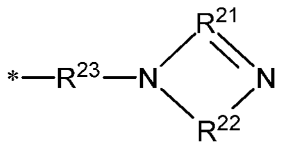

(9)

(In formula (9), $R^{23}$ represents a C1 to C20 alkanediyl group; $R^{21}$ represents a C1 to C20 hydrocarbylidene group; $R^{22}$ represents a C1 to C20 alkanediyl group or alkenediyl group, and forms a ring structure of 5 or more members together with two adjacent nitrogen atoms; and "*" represents a chemical bond connectable to the nitrogen atom in formula (6).)

[F8]

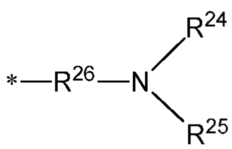

(10)

(In formula (10), $R^{26}$ represents a C1 to C20 hydrocarbylene group; each of $R^{24}$ and $R^{25}$ independently represents a C1 to C20 hydrocarbyl group, or $R^{24}$ and $R^{25}$ form a C4 to C20 ring structure by combining of $R^{24}$ and $R^{25}$ with the nitrogen atom to which $R^{24}$ and $R^{25}$ are bonded; $R^{24}$ and $R^{25}$ form a ring structure of 5 or more members by combining of $R^{24}$ and $R^{25}$ with the nitrogen atom to which $R^{24}$ and $R^{25}$ are bonded, and another nitrogen atom different from the

nitrogen atom to which $R^{24}$ and $R^{25}$ are bonded or an oxygen atom; and "*" represents a chemical bond connectable to the nitrogen atom in formula (6).)

(Compound represented by formula (5))

In formula (5), examples of the hydrocarbyl group of $R^1$ and $R^2$ include a C1 to C20 alkyl group, an allyl group, a C3 to C20 cycloalkyl group, and a C6 to C20 aryl group. The alkanediyl group of $R^3$ is preferably a C1 to C10 alkanediyl group, more preferably a C2 to C10 alkanediyl group. $R^3$ is preferably a linear-chain group.

The hydrocarbyl group of $R^5$ in $A^1$ is the same as defined in $R^1$ and $R^2$. The parameter "n" is preferably 2 or 3, more preferably 3, from the viewpoint of effective improvement in dispersibility of silica.

Examples of the m-valent hydrocarbyl group of $R^4$ include groups generated by removing m hydrogen atoms from a C1 to C20 chain hydrocarbyl group, a C3 to C20 alicyclic hydrocarbyl group, or a C6 to C20 aromatic hydrocarbyl group. Specific examples of the aromatic hydrocarbyl group include a ring structure represented by formula (C1), and a polycyclic structure in which two or more such ring structures are linked to one another (e.g., a biphenyl group).

[F9]

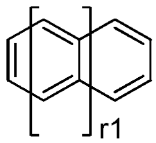

(C1)

(In formula (C1), r1 is an integer of 0 to 5.)

When $R^4$ is a C1 to C20 m-valent group which has at least one element selected from the group consisting of nitrogen, oxygen, and sulfur and in which no active hydrogen is bonded to the element, specific examples of preferred groups include an m-valent heterocyclic group and an m-valent group having a tertiary amine structure. The heterocyclic group preferably has a conjugation system, and examples thereof include groups generated by removing m hydrogen atoms from a single ring or condensed ring of pyridine, pyrimidine, pyrazine, quinoline, naphthalidine, furan, thiophene, etc., or from a ring moiety having a structure generated by linking a plurality of such single rings or condensed rings. The parameter "m" is an integer of 2 to 10, and is preferably 2 to 6, from the viewpoint of processability of the polymer composition.

Specific examples of the compound represented by formula (5) include compounds represented by formulas (M-1) to (M-4). $R^{27}$ in formula (M-1) represents a hydrogen atom or an alkyl group, and n1 is an integer of 1 to 8.

[F10]

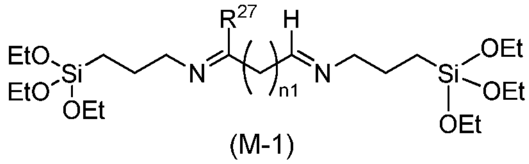

(M-1)

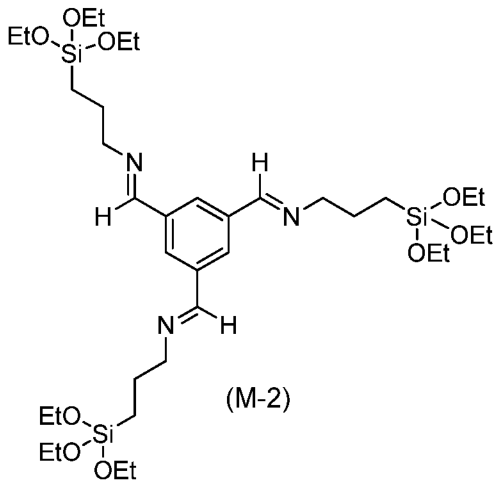

(M-2)

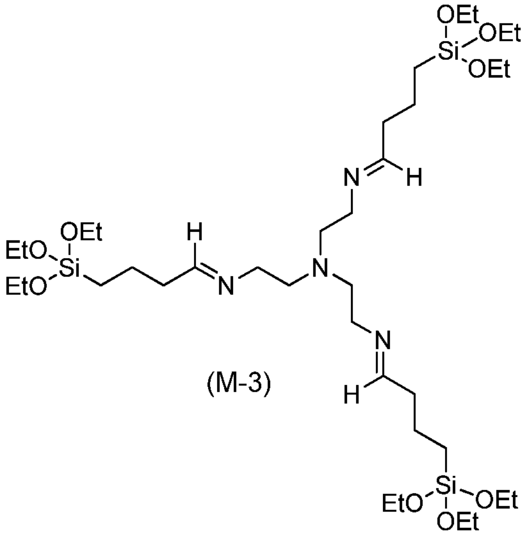

(M-3)

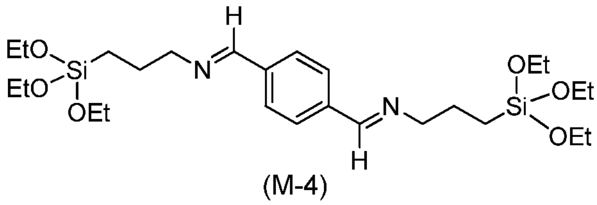

(M-4)

(Compound represented by formula (6))

Examples of the C1 to C20 hydrocarbyl group of $R^6$, $R^7$, $R^{10}$, $R^{11}$, $R^{12}$, $R^{13}$, $R^{15}$, $R^{17}$, $R^{18}$, $R^{24}$, and $R^{25}$ in formulas (6) and (7) to (10) include a C1 to C20 alkyl group, an allyl group, a C3 to C20 cycloalkyl group, and a C6 to C20 aryl group. The C1 to 20 alkanediyl group, alkenedily group, and hydrocarbylidene group of $R^8$, $R^9$, $R^{14}$, $R^{16}$, $R^{20}$, $R^{21}$, $R^{22}$, $R^{23}$, and $R^{24}$ is preferably a C1 to C10 group, more preferably a C2 to C10 group. $R^{19}$ is preferably a C3 to C10 group, more preferably a C3 to C5 group.

In formula (8), the ring structure formed from $R^{19}$, a nitrogen atom, and a silicon atom is preferably a 5- to 7-membered ring, more preferably a 5- or 6-membered ring. In formula (9), the ring structure formed from $R^{21}$, $R^{22}$, and two adjacent nitrogen atoms is preferably a 5- to 12-membered ring, more preferably a 5- to 7-membered ring.

In formula (10), when a set of $R^{24}$ and $R^{25}$ represents a C4 to C20 ring structure by combining of $R^{24}$ and $R^{25}$ with the nitrogen atom to which $R^{24}$ and $R^{25}$ are bonded, the ring structure is preferably a C4 to C9 ring, more preferably a C4 to C6 ring. When $R^{24}$ and $R^{25}$ form a ring structure of 5 or more members by combining of $R^{24}$ and $R^{25}$ with the nitrogen atom to which $R^{24}$ and $R^{25}$ are bonded, and another nitrogen atom different from the nitrogen atom to which $R^{24}$ and $R^{25}$ are bonded or an oxygen atom, the ring structure is preferably a 5- to 10-membered ring, more preferably a 5- to 7-membered ring. Specific examples of the ring structure of 5 or more members include a piperazine ring structure and a morpholine ring structure.

Each of the parameters w, p, and q is preferably 2 or 3, more preferably 3, from the viewpoint of excellent effect of improving silica dispersion. For the same reason, s is preferably 2.

Specific examples of the compound represented by formula (6) include compounds (in which $A^2$ in formula (6) is a group represented by formula (7)) such as N,N,N',N'-tetra(3-trimethoxysilylpropyl)ethylenediamine, N,N,N',N'-tetra(3-triethoxysilylpropyl)ethylenediamine, N,N,N'-tris(3-trimethoxysilylpropyl)-N'-methyl-ethylenediamine, N,N,N',N'-tetra(3-trimethoxysilylpropyl)-1,3-propanediamine, N,N,N',N'-tetra(3-trimethoxysilylpropyl)-1,4-butanediamine, and bis(3-trimethoxysilylpropyl)-[2-(dimethylamino)ethyl]amine; compounds (in which $A^2$ in formula (6) is a group represented by formula (8)) such as bis(3-trimethoxysilylpropyl)-[2-(2,2-dimethoxy-1-aza-2-silacyclopentane)ethyl]amine, bis(3-triethoxysilylpropyl)-[2-(2,2-diethoxy-1-aza-2-silacyclopentane)ethyl]amine, bis(3-trimethoxysilylpropyl)-[3-(2,2-dimethoxy-1-aza-2-silacyclopentane)propyl]amine, bis(3-trimethoxysilylpropyl)-[2-(2,2-dimethoxy-1-aza-2-silacyclohexane)ethyl]amine, and bis(3-trimethoxysilylpropyl)-[2-(2,2-dimethoxy-1-aza-2-silacyclooctane)ethyl]amine; compounds (in which $A^2$ in formula (6) is a group represented by formula (9)) such as N,N-bis(3-trimethoxysilylpropyl)-3-imidazolylpropylamine; and compounds (in which $A^2$ in formula (6) is a group represented by formula (10)) such as bis(3-trimethoxysilylpropyl)-(3-dimethylaminopropyl)amine.

In the polymerization step, when a metal amide compound is used as a polymerization initiator, a compound containing no nitrogen, oxygen, or sulfur (e.g., the aforementioned silicon-containing compound) may be used as coupling agent [B]. Alternatively, terminal modifier (b1) may be used. In the polymerization step, when a metal amide compound

is not used as a polymerization initiator, terminal modifier (b1) is used as coupling agent [B]. Among the above cases, from the viewpoint of effectively achieving high mechanical strength and wear resistance of the cross-linked product and an improvement in processability of the polymer composition, the following modes are preferred: use of a metal amide compound as a polymerization initiator in the polymerization step, and a silicon-containing compound (e.g., tetrachlorosilicon) as coupling agent [B] in the step; and use of a metal amide compound as a polymerization initiator in the polymerization step, and terminal modifier (b1) as coupling agent [B] in the step.

Preferably, reaction between conjugated diene-based polymer (I) having active terminals and coupling agent [B] is performed in the mode of solution reaction. The relative amount of coupling agent [B] (the total amount, when 2 or more species are used) may be appropriately adjusted so that the polymer (A1) content falls within a desired range. Specifically, from the viewpoints of producing a cross-linked product having high mechanical strength and wear resistance and a polymer composition having high processability, the amount of coupling agent [B] to be used is preferably 0.01 mol or more, more preferably 0.05 mol or more, with respect to 1 mol of metal atoms which are involved in polymerization and contained in the polymerization initiator (i.e., a metallic compound). Also, from the viewpoints of regulating the coupling ratio to a desired value, suppressing a drop in processability, and sufficiently reducing the viscosity of the polymer solution to secure productivity, the amount of coupling agent [B] to be used is preferably 0.7 mol or less, more preferably 0.5 mol or less, with respect to 1 mol of metal atoms involved in polymerization and contained in the polymerization initiator . Notably, agents serving as coupling agent [B] may be used singly or in combination of two or more species.

The reaction temperature in the coupling reaction is generally the same as employed in polymerization reaction, and is preferably -20°C to 150°C, more preferably 0 to 120°C. When the reaction temperature is low, the viscosity of the polymer formed through reaction tends to increase, whereas when the reaction temperature is high, polymerization active terminals are easily deactivated. The reaction time is preferably 1 minute to 5 hours, more preferably 2 minutes to 1 hour.

In the coupling reaction, the coupling ratio may be predetermined in accordance with the ratio of unhydrogenated polymer (A1) present in conjugated diene-based polymer (II), the molecular weight of conjugated diene-based polymer (I), the number of functional groups present in coupling agent [B], or other factors. From the viewpoint of providing a cross-linked product having high mechanical strength and wear resistance, the coupling ratio is preferably 250 or higher, more preferably 300 or higher. From the viewpoints of providing a polymer composition of high processability and sufficiently reducing the viscosity of the polymer solution to secure productivity, the coupling ratio is preferably 750 or lower, more preferably 700 or lower.

As used herein, the term "coupling ratio" refers to a ratio (mass%) of the amount of a coupling polymer having 2 or more molecular chains to the amount of the polymer(s) present in the reaction system after completion of reaction between a linear-chain conjugated diene-based polymer having active terminals and a compound reactive with the active terminals. More specifically, the coupling ratio refers to a ratio (mass%) of the amount of a polymer in which 2 or more linear molecular chains are linked by the mediation of coupling agent [B] or terminal modifier (c) to the total amount of the polymer used in the reaction with coupling agent [B] or terminal modifier (c) (i.e., the amount of a linear-chain polymer present in conjugated diene-based polymer (I)). The coupling ratio can be calculated by a peak area ratio in a GPC curve obtained through gel permeation chromatography (GPC). Similarly, the relative amount of a coupling polymer having 4 or more molecular chains can also be calculated by a peak area ratio in a GPC curve obtained through gel permeation chromatography (GPC).

Through the coupling reaction, conjugated diene-based polymer (II) can be yielded. Conjugated diene-based polymer (II) preferably includes unhydrogenated polymer (A1) and a linear-chain or a branched (≤3 branches) polymer (i.e., unhydroganated polymer (A2)). Among the polymers included in conjugated diene-based polymer (I), the linear-chain or a branched (≤3 branches) polymer is a polymer in which 3 or fewer linear molecular chains are linked by the mediation of coupling agent [B] or terminal modifier (c); a polymer which has not been reacted with coupling agent [B] and terminal modifier (c); or both of them. In conjugated diene-based polymer (II), the ratio of a polymer having a multi-branched structure having 4 or more molecular chains (i.e., unhydrogenated polymer (A1)) to a linear-chain or a branched (≤3 branches) polymer can be appropriately predetermined by modifying the amount of coupling agent [B] used, the number of functional groups of coupling agent [B] used, etc., such that the ratios of polymer (A1) and polymer (A2) in conjugated diene-based polymer [A] are adjusted to target values.

Notably, when the conjugated diene-based polymer contained in the reaction solution is isolated, a known solvent-removal operation, such as steam stripping, and a drying operation, such as heat treatment, may be conducted.

<Modification step>

The thus-produced conjugated diene-based polymer (II) as is may be supplied to the hydrogenation step. Alternatively, before the hydrogenation step, a treatment may be performed to react a polymerization-completed terminal of a linear-chain polymer included in conjugated diene-based polymer (II) with terminal modifier (c). As terminal modifier

(c), a compound which has at least one element selected from the group consisting of nitrogen, phosphorus, oxygen, sulfur, and silicon and which can react with active terminals of the linear-chain polymer is preferably used. In this case, there can be produced a linear-chain or a branched (≤3 branches) polymer having a functional group containing at least one element selected from the group consisting of nitrogen, phosphorus, oxygen, sulfur, and silicon. Notably, terminal modifier (c) differs from coupling agent [B] in that (c) has 3 or fewer reaction points with active terminals of conjugated diene-based polymer (I).

Preferred specific examples of the terminal modifier include at least one species selected from the group consisting of the compounds represented by formula (11) and the compounds represented by formula (12).

[F11]

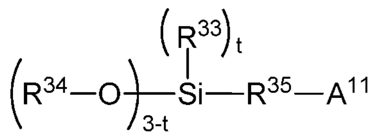

(11)

(In formula (11), $A^{11}$ represents a monovalent functional group which has at least one element selected from the group consisting of nitrogen, phosphorus, oxygen, sulfur, and silicon, which does not have active hydrogen, and which is bonded to $R^{35}$ via nitrogen, phosphorus, oxygen, sulfur, silicon, or a carbon atom contained in a carbonyl group, or a (thio) epoxy group; $R^{33}$ and $R^{34}$ each independently represent a hydrocarbyl group; $R^{35}$ represents a hydrocarbylene group; t is an integer of 0 to 2; when t is 2, a plurality of groups $R^{33}$ in the formula are the same or different; and when t is 0 or 1, a plurality of groups $R^{34}$ in the formula are the same or different.)

[F12]

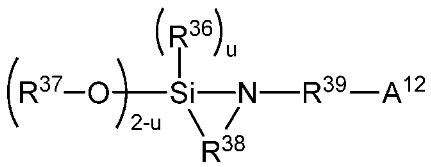

(12)

(In formula (12), $A^{12}$ represents a monovalent functional group which has at least one element selected from the group consisting of nitrogen, phosphorus, oxygen, sulfur, and silicon, which does not have active hydrogen, and which is bonded to $R^{39}$ via nitrogen, phosphorus, oxygen, sulfur, or silicon, or a C1 to C20 hydrocarbyl group; $R^{36}$ and $R^{37}$ each independently represent a hydrocarbyl group; $R^{38}$ represents a hydrocarbylene group; $R^{39}$ represents a single bond or a hydrocarbylene group; u is 0 or 1; and when u is 0, a plurality of groups $R^{37}$ in the formula are the same or different.)

In formulae (11) and (12), the hydrocarbyl group represented by $R^{33}$, $R^{34}$, $R^{36}$, $R^{37}$, or $A^{12}$ is preferably a C1 to C20 linear or branched alkyl group, a C3 to C20 cycloalkyl group, or a C6 to C20 aryl group.

The hydrocarbylene group represented by $R^{35}$ or $R^{39}$ is preferably a C1 to C20 linear or branched alkanediyl group, a C3 to C20 cycloalkylene group, or a C6 to C20 arylene group. The hydrocarbylene group represented by $R^{38}$ is preferably a C1 to C20 linear or branched alkanediyl group.

t is preferably 0 or 1.

When $A^{11}$ is the aforementioned monovalent functional group, at least one element (contained in $A^{11}$) selected from the group consisting of nitrogen, phosphorus, oxygen, sulfur, and silicon may be protected with a protective group (e.g., a tri-substituted hydrocarbylsilyl group). When $A^{12}$ is the aforementioned monovalent functional group, at least one element (contained in $A^{12}$) selected from the group consisting of nitrogen, phosphorus, oxygen, sulfur, and silicon may be protected with a protective group (e.g., a tri-substituted hydrocarbylsilyl group). As used herein, the term "active hydrogen" refers to a hydrogen atom bonded to an atom other than a carbon atom, preferably a hydrogen atom having a bonding energy lower than that of a carbon-hydrogen bond of polymethylene. The term "(thio)epoxy group" is intended to encompass an epoxy group and a thioepoxy group.

$A^{11}$ may be a group that can be formed into an onium ion by an onium salt generator. When the terminal modifier (c) has such a group ($A^{11}$), the terminal modifier (c) can provide the polymer with superior shape-maintaining ability. Specific examples of the group $A^{11}$ include a nitrogen-containing group prepared through substitution of two hydrogen atoms of a primary amino group with two protective groups, a nitrogen-containing group prepared through substitution of one hydrogen atom of a secondary amino group with one protective group, a tertiary amino group, an imino group, a pyridyl group, a phosphorus-containing group prepared through substitution of two hydrogen atoms of a primary phosphino group with two protective groups, a phosphorus-containing group prepared through substitution of one hydrogen atom of a secondary phosphino group with one protective group, a tertiary phosphino group, an epoxy group, a thioepoxy group, a group prepared through substitution of the hydrogen atom of a hydroxyl group with a protective group, a sulfur-containing group prepared through substitution of the hydrogen atom of a thiol group with a protective group, and a hydrocarbyloxycarbonyl group. Of these, a nitrogen-atom-containing group is preferred, since it exhibits good affinity to silica. The group $A^{11}$ is more preferably a tertiary amino group or a nitrogen-containing group prepared through substitution of two hydrogen atoms of a primary amino group with two protective groups. The term "protective group" is a functional group for converting the group $A^{11}$ or $A^{12}$ into a functional group inactive to a polymerization active terminal. The term "onium salt generator" is a Bronsted acid or a compound that forms a Bronsted acid on contact with water.

Specific examples of terminal modifier (c) include compounds represented by formula (11), such as N,N-bis(trimethylsilyl)aminopropyltrimethoxysilane, N,N-dimethylaminopropyltriethoxysilane, N,N-bis(trimethylsilyl)aminopropylmethyldiethoxysilane, N,N',N'-tris(trimethylsilyl)-N-(2-aminoethyl)-3-aminopropyltriethoxysilane, 3-(4-trimethylsilyl-1-piperazino)propylmethyldimethoxysilane, 3-glycidoxypropylmethyldimethoxysilane, and 3-glycidoxypropyltriethoxysilane.

Specific examples of compounds represented by formula (12) include 2,2-dimethoxy-1-(3-trimethoxysilylpropyl)-1,2-azasilolidine, 2,2-diethoxy-1-(3-trimethoxysilylpropyl)-1,2-azasilolidine, 2,2-dimethoxy-1-phenyl-1,2-azasilolidine, 1-trimethylsilyl-2,2-dimethoxy-1-aza-2-silacyclopentane, 2-(2,2-dimethoxy-1,2-azasilolidin-1-yl)-N,N-diethylethan-1-amine, 2-(2,2-dimethoxy-1,2-azasilolidin-1-yl)-N,N-dimethylethan-1-amine, and 3-(2,2-dimethoxy-1,2-azasilolidin-1-yl)-N,N-diethylpropan-1-amine. Terminal modifier (c) may be used singly or in combination of two or more species.

Reaction between conjugated diene-based polymer (II) and terminal modifier (c) may be performed in the mode of, for example, solution reaction. The solution reaction may be performed in a batch manner or a continuous manner. No particular limitation is imposed on the method of adding terminal modifier (c), and examples of the addition method include one-batch addition, addition in a divided manner, and continuous addition.

The amount of terminal modifier (c) to be used may be appropriately predetermined in accordance with the type of the compounds involved in the reaction. The amount of terminal modifier (c) to be used is preferably 0.05 mol or more, more preferably 0.1 mol or more, with respect to 1 mol of metal atoms of a polymerization initiator which is involved in polymerization reaction. By adjusting the amount of terminal modifier (c) to be 0.1 mol eq. or more, modification reaction can sufficiently proceed, whereby dispersion of inorganic fillers can be suitably improved. Also, the amount of terminal modifier (c) to be used is preferably 1.0 mol or less, more preferably 0.8 or less, with respect to 1 mol of metal atoms of a polymerization initiator which is involved in polymerization reaction.

The reaction temperature in the terminal modification reaction is generally the same as that employed in polymerization reaction, and is preferably -20°C to 150°C, more preferably 0 to 120°C, still more preferably 20 to 100°C. When the modification reaction temperature is low, the viscosity of the solution of the polymer formed through reaction tends to increase, whereas when the modification reaction temperature is high, polymerization active terminals are easily deactivated. The reaction time in terminal modification is preferably 1 minute to 5 hours, more preferably 2 minutes to 1 hour.

<Hydrogenation step>

In this step, the conjugated diene-based polymer obtained in the aforementioned reaction step or modification step is hydrogenated (hereinafter, the process may be referred to as "hydrogenation"). So long as a target hydrogenation ratio of the conjugated diene-based polymer is attained, any method and conditions of hydrogenation may be employed. Examples of the hydrogenation method include a method employing a catalyst predominantly containing an organometallic compound of titanium as an hydrogenation catalyst; a method employing a catalyst composed of an organometallic compound of iron, nickel, or cobalt, and another organometallic compound such as an alkylaluminum; a method employing an organic complex of an organic metallic compound of ruthenium, rhodium, etc.; and a method employing a catalyst containing a metal such as palladium, platinum, ruthenium, cobalt, or nickel, supported on a carrier such as carbon, silica, or alumina. Among the aforementioned methods, a method in which hydrogenation is performed under mild conditions (low pressure and temperature) in the presence of a homogeneous catalyst composed of solely an organic titanium compound or an organometallic compound of titanium with another organometallic compound of lithium, magnesium, or aluminum (e.g., a catalyst disclosed in, for example, Japanese Patent Publications (kokoku) No. 1988-4841 and 1989-37970) is industrially preferred. Also, such methods are suitable, since hydrogenation selectivity to the double bond of butadiene is high.

Hydrogenation of a conjugated diene-based polymer is preferably conducted in a solvent which in inert to the catalyst and which can dissolve the conjugated diene-based polymer. Examples of preferred such solvents include linear-chain aliphatic hydrocarbons such as n-pentane, n-hexane, and n-octane; alicyclic hydrocarbons such as cyclohexane and cycloheptane; aromatic hydrocarbons such as benzene and toluene; and ethers such as diethyl ether and tetrahydrofuran. The aforementioned solvent employed in hydrogenation may be one of the compounds or a mixture

predominantly containing any of the compounds.

In general, the hydrogenation reaction is performed through the following procedure: the conjugated diene-based polymer is maintained at a predetermined temperature in a hydrogen or inert atmosphere, a hydrogenation catalyst is added under stirring or non-stirring, and hydrogen gas is introduced to thereby increase the pressure to a predetermined level. The term "inert atmosphere" refers to an atmosphere that causes no reaction to the participants involved in the hydrogenation reaction; for example, a helium, neon, or argon atmosphere. Air or oxygen is not preferred, since it causes inactivation of a catalyst through, for example, oxidation of the catalyst. Nitrogen is not also preferred, since it acts as a catalyst poison during the hydrogenation reaction to thereby reduce hydrogenation activity. Most preferably, the hydrogenation reactor is filled with a hydrogen gas atmosphere alone.

The hydrogenation reaction process may be a batch process, a continuous process, or a mixture thereof. In the case where the hydrogenation catalyst is a titanocene diaryl compound, the compound may be added as is to the reaction mixture, or may be added in the form of a solution of the compound in an inert organic solvent. The inert organic solvent used when the catalyst is used in the form of a solution may be any solvent that does not react with the participants involved in the hydrogenation reaction. Preferably, the inert organic solvent is identical to the solvent used in the hydrogenation reaction. The amount of the catalyst added is 0.02 to 20 mmol relative to 100 g of the conjugated diene-based polymer before hydrogenation.

Conjugated diene-based polymer [A] exhibits a value $\alpha$ defined by mathematical expression (i):

$$\alpha=(p+(0.5\times r))/(p+q+(0.5\times r)+s) \quad \cdots \quad (i);$$

of 0.65 to 0.97, wherein p, q, r, and s represent the compositional ratios (mole ratios) of the structural units represented by formulas (1) to (4), respectively;

[F13]

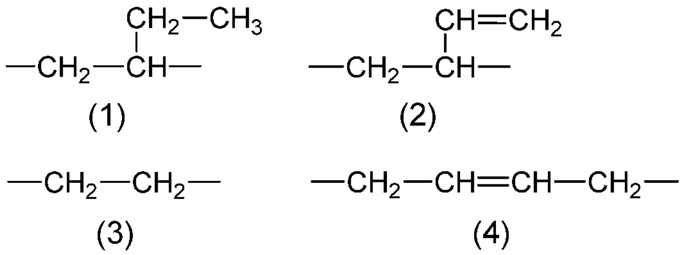

(1) (2)

(3) (4)

in the polymer.

In conjugated diene-based polymer [A], from the viewpoint of providing a cross-linked product having more excellent wear resistance, the value $\alpha$ defined by the above mathematical expression (i) is preferably 0.70 or more, more preferably 0.75 or more, still more preferably 0.80 or more, particularly preferably 0.85 or more. The value $\alpha$ defined by the above mathematical expression (i) corresponds to a hydrogenation ratio of the conjugated diene-based polymer. For example, when the value $\alpha$ is 0.65, the hydroganation ratio of the conjugated diene-based polymer is 650. From the viewpoints of forming a cross-link structure and achieving suitable processability, the value $\alpha$ is more preferably 0.96 or less, still more preferably 0.93 or less. Notably, the hydrogenation ratio of the polymer and the value $\alpha$ can be modified by controlling, for example, the time of hydrogenation reaction, regulating cumulative feed amount of hydrogen, etc. In the present specification, hydrogenation ratio values were determined by means of an $^1$H-NMR apparatus.

In one preferred procedure of yielding conjugated diene-based polymer [A], monomers including 1,3-butadiene are subjected to solution polymerization in the presence of a polymerization initiator (preferably a metal amide compound). To the thus-obtained polymer solution, coupling agent [B] is added, and the mixture is subjected to a coupling reaction. If needed, terminal modifier (c) is further added, and the resultant mixture is transferred to a hydrogenation step. The procedure is industrially advantageous. In this case, conjugated diene-based polymer [A] is isolated by removing the solvent from the above-obtained solution. Isolation of the polymer may be carried out through a known solvent-removal operation, such as steam stripping, and a drying operation, such as heat treatment.

The weight average molecular weight (Mw) (as reduced to polystyrene) of conjugated diene-based polymer [A] determined through gel permeation chromatography (GPC) is preferably $1.5\times10^5$ to $2.0\times10^6$, from the viewpoint of providing a cross-linked product having high mechanical strength and excellent wear resistance. The Mw of the conjugated diene-based polymer is more preferably $1.8\times10^5$ or higher, still more preferably $2.0\times10^5$ or higher. Also, the Mw is more preferably $1.6\times10^6$ or lower, still more preferably $1.4\times10^6$ or lower. Notably, the weight average molecular weight of the conjugated diene-based polymer is determined from the total peak area of the GPC curve measured through GPC

before hydrogenation. Hereinafter, the molecular weight may also be referred to as a "total weight average molecular weight."

The molecular weight distribution (weight average molecular weight/number average molecular weight) of conjugated diene-based polymer [A] based on the total amount of polymer (i.e., an integrated polymer having various molecular weights) determined through GPC is preferably 1.1 to 4.0. When the molecular weight distribution is 1.1 or more, excellent processability can be attained, whereas when the molecular weight distribution is 4.0 or less, low hysteresis loss property of the produced cross-linked product can be sufficiently improved. Both cases are preferred. The molecular weight distribution of conjugated diene-based polymer [A] is more preferably 1.20 or more, still more preferably 1.23 or more. The molecular weight distribution is more preferably 3.5 or less, still more preferably 3.0 or less.

The "1st peak molecular weight" of conjugated diene-based polymer [A] determined through GPC is preferably $0.8\times10^5$ to $1.0\times10^6$. The "1st peak molecular weight" is a peak top molecular weight of the lowest molecular weight peak. A 1st peak molecular weight of $0.8\times10^5$ or higher is preferred, since processability can be further enhanced, while the effect of improving mechanical strength and wear resistance of the obtained cross-linked product can be sufficiently enhanced. The 1st peak molecular weight is more preferably $0.9\times10^5$ or higher, still more preferably $1.0\times10^5$ or higher. In addition, from the viewpoint of achieving more excellent processability and viscoelastic characteristics, the 1st peak molecular weight is more preferably $8.0\times10^5$ or lower, still more preferably $5.0\times10^5$ or lower. Notably, the 1st peak molecular weight is determined from the GPC curve measured through GPC before hydrogenation.

Conjugated diene-based polymer [A] produced through the above steps contains polymer (A1) in an amount of 25 to 75 mass%, wherein polymer (A1) has a multi-branched structure having 4 or more molecular chains and a functional group having a particular element (i.e., at least one species selected from the group consisting of nitrogen, oxygen, and sulfur) at one or both a terminal and a branching point of polymer (A1). Preferably, polymer (A1) has a combined structure in which 4 or more molecular chains are bonded to a moiety derived from coupling agent [B] containing at least one element selected from the group consisting of nitrogen, oxygen, sulfur, and silicon.

Preferably, conjugated diene-based polymer [A] includes polymer (A1) and linear-chain or a branched (≤3 branches) polymer (A2). More specifically, among conjugated diene-based polymer (1) product obtained through the above polymerization steps, polymer (A2) is a hydrogenated product of a polymer in which 3 or fewer linear molecular chains are linked by the mediation of coupling agent [B] or terminal modifier (c); a hydrogenated product of a polymer which has not been reacted with coupling agent [B] and terminal modifier (c); or both of them. From the viewpoint of providing a cross-linked product having higher mechanical strength and excellent wear resistance, polymer (A2) preferably has a functional group containing at least one element selected from the group consisting of nitrogen, phosphorus, oxygen, sulfur, and silicon. Also, from the viewpoint of providing a cross-linked product having higher mechanical strength and excellent wear resistance, polymer (A2) preferably includes a linear-chain polymer which has a secondary or tertiary amino group at one terminal, and a functional group containing a particular element (i.e., at least one element selected from the group consisting of nitrogen, oxygen, and sulfur) at the other terminal. Thus, the both terminal-modified linear-chain polymer can be produced through the above polymerization step with use of a metal amide compound as a polymerization initiator, and the above modification step.

The polymer (A1) content of conjugated diene-based polymer [A] is 25 to 75 mass% with respect to the amount of conjugated diene-based polymer [A] as 100 mass%. Through controlling the ratio of polymer (A1) to conjugated diene-based polymer [A] to fall within the above range, an excellent balance between the mechanical strength and wear resistance of the cross-linked product and the processability of the polymer composition can be achieved. Further, by reducing the viscosity of polymer solution, transfer of the polymer solution via a pipe or to a container can be carried out smoothly in a polymer production step, and the time of hydrogenation can be shortened in a hydrogenation step, whereby sufficient productivity can be secured. The polymer (A1) content of conjugated diene-based polymer [A] is preferably 28 mass% or more, more preferably 30 mass% or more, still more preferably 40 mass% or more, yet more preferably 50 mass% or more. Also, the polymer (A1) content of conjugated diene-based polymer [A] is preferably 73 mass% or less, more preferably 70 mass% or less.

The polymer (A2) content of conjugated diene-based polymer [A] is preferably 25 to 75 mass% with respect to the amount of conjugated diene-based polymer [A] as 100 mass%. The polymer (A2) content of conjugated diene-based polymer [A] is preferably 27 mass% or more, more preferably 30 mass% or more. Also, the polymer (A2) content of conjugated diene-based polymer [A] is preferably 72 mass% or less, more preferably 70 mass% or less, still more preferably 60 mass% or less, yet more preferably 50 mass% or less. Notably, the polymer (A1) content (mass%) or polymer (A2) content (mass%) of conjugated diene-based polymer [A] can be calculated by isolating the component of the wave form of the coupling polymer in a GPC curve obtained through GPC.

<Polymer composition>

The polymer composition of the present disclosure comprises conjugated diene-based polymer [A] and other ingredients other than conjugated diene-based polymer [A].

[D] Silica

The polymer composition of the present disclosure may contain silica [D] as an inorganic filler. The silica [D] content is preferably 20 to 120 parts by mass, more preferably 30 to 100 parts by mass, with respect to 100 parts by mass of rubber components (including conjugated diene-based polymer [A]) contained in the polymer composition. When the silica [D] content is 20 parts by mass or more with respect to 100 parts by mass of rubber components, low hysteresis loss property of the polymer composition, fracture performance, and wear resistance can be sufficiently enhanced, whereas when the silica [D] content is 120 parts by mass or less, processability of the polymer composition can be sufficiently enhanced.

No particular limitation is imposed on the silica [D] for use in the polymer composition of the present disclosure, and examples thereof include wet silica (hydrous silicic acid), dry silica (anhydrous silicic acid), calcium silicate, and aluminum silicate. Of these, wet silica is preferred. These silica products may be used singly or in combination of two or more species. The BET specific surface area of silica (measured according to ISO 5794/1) is preferably 40 to 350 $m^2/g$, more preferably 80 to 350 $m^2/g$, particularly preferably 120 to 350 $m^2/g$. When the silica species has a BET specific surface area satisfied the above conditions, both rubber-reinforcing performance and diepersibility in conjugated diene-based polymer [A] can be attained, which is advantageous. Examples of commercial products of such a silica species which may be used in the invention include "Nipsil AQ" (product of TOSOH SILICA CORPORATION, BET specific surface area = 205 $m^2/g$) and "Nipsil KQ," and "ULTRASIL VN3" (product of Degussa, BET specific surface area = 175 $m^2/g$).

The silica species contained in the polymer composition of the present disclosure may be used in combination of two or more species having different specific surface areas. Specifically, there may be used a first silica species having a CTAB specific surface area of 180 $m^2/g$ or more, a BET specific surface area of 185 $m^2/g$ or more, and an aggregate size of 45 nm or greater, in combination with a second silica species having a CTAB specific surface area of 95 $m^2/g$ or less and a BET specific surface area of 100 $m^2/g$ or less.

The polymer composition of the present disclosure contains a first silica species having a CTAB specific surface area of 180 $m^2/g$ or more, a BET specific surface area of 185 $m^2/g$ or more, and an aggregate size of 45 nm or greater, in combination with a second silica species having a CTAB specific surface area of 95 $m^2/g$ or less and a BET specific surface area of 100 $m^2/g$ or less. By use of such first and second silica species in combination, the first silica having a small mean primary particle size but having a relatively large aggregate size can be suitably dispersed in rubber components. As a result, dispersibility of silica particles can be improved, and excellent fracture strength and wear resistance, good fuel efficiency, and processability can be attained.

The CTAB (cetyltrimethylammonium bromide) specific surface area of the first silica species is preferably 190 $m^2/g$ or more, more preferably 195 $m^2/g$ or more, still more preferably 197 $m^2/g$ or more. When the CTAB specific surface area is less than 180 $m^2/g$, difficulty is often encountered in attaining satisfactory enhancement in fracture strength and wear resistance. The CTAB specific surface area of the first silica species is preferably 350 $m^2/g$ or less, more preferably 300 $m^2/g$ or less, still more preferably 250 $m^2/g$ or less. When the CTAB specific surface area is in excess of 350 $m^2/g$, dispersibility decreases, thereby causing aggregation. In this case, physical properties tend to be impaired. Notably, the CTAB specific surface area of silica species is determined in accordance with ASTM D3765-92.

The BET specific surface area of the first silica species is preferably 190 $m^2/g$ or more, more preferably 195 $m^2/g$ or more, still more preferably 210 $m^2/g$ or more. When the BET specific surface area is less than 185 $m^2/g$, difficulty is often encountered in attaining satisfactory enhancement in fracture strength and wear resistance. The BET specific surface area of the first silica species is preferably 350 $m^2/g$ or less, more preferably 300 $m^2/g$ or less, still more preferably 260 $m^2/g$ or less. When the BET specific surface area is in excess of 350 $m^2/g$, dispersibility decreases, thereby causing aggregation. In this case, physical properties tend to be impaired. Notably, the BET specific surface area of silica species is determined in accordance with ASTM D3037-81.

The aggregate size of the first silica species is 45 nm or greater, preferably 50 nm or greater, more preferably 55 nm or greater, still more preferably 60 nm or greater. Also, the aggregate size of the first silica species is preferably 100 nm or smaller, more preferably 80 nm or smaller, still more preferably 70 nm or smaller, particularly preferably 67 nm or smaller. Such an aggregate size can lead excellent fuel efficiency and wear resistance, while suitable dispersibility (processability) is maintained. Notably, the aggregate size of silica species can be measured through a method disclosed in Japanese Patent Application Laid-Open (kokai) No. 2011-140613.

The mean primary particle size of the first silica species is preferably 25 nm or smaller, more preferably 22 nm or smaller, still more preferably 17 nm or smaller, particularly preferably 14 nm or smaller. Also, the mean primary particle size of the first silica species is preferably 3 nm or greater, more preferably 5 nm or greater, still more preferably 7 nm or greater. Although the mean primary particle size is small, the first silica species forms a carbon black-like structure having the aforementioned aggregate size. As a result, dispersibility (processability) of silica can be more improved, and fuel efficiency and wear resistance can be further improved. Notably, the mean primary particle size of silica species can be determined by observing silica particles under a transmission electron microscope or a scanning electron microscope; measuring the particle sizes of 400 or more primary particles of silica observed in the vision field; and averaging the particle size measurements.

The CTAB specific surface area of the second silica species is preferably 10 $m^2/g$ or more, more preferably 20 $m^2/g$ or more, still more preferably 30 $m^2/g$ or more. When the CTAB specific surface area is less than 10 $m^2/g$, reinforcing performance decreases. In such a case, conceivably, difficulty is encountered in securing dynamic strength and wear resistance required for a polymer composition for producing tires. The CTAB specific surface area of the second silica species is preferably 80 $m^2/g$ or less, more preferably 60 $m^2/g$ or less, still more preferably 50 $m^2/g$ or less. When the CTAB specific surface area is in excess of 95 $m^2/g$, dispersibility of silica decreases, and difficulty is conceivably encountered in enhancement of fracture strength and wear resistance.

The BET specific surface area of the second silica species is preferably 10 $m^2/g$ or more, more preferably 20 $m^2/g$ or more, still more preferably 30 $m^2/g$ or more. When the BET specific surface area is less than 10 $m^2/g$, reinforcing performance decreases. In such a case, difficulty may be encountered in securing dynamic strength and wear resistance required for a polymer composition for producing tires. The BET specific surface area of the second silica species is preferably 85 $m^2/g$ or less, more preferably 60 $m^2/g$ or less, still more preferably 50 $m^2/g$ or less. When the BET specific surface area is in excess of 100 $m^2/g$, dispersibility of silica decreases, and difficulty is conceivably encountered in enhancement of fracture strength and wear resistance.

The mean primary particle size of the second silica species is preferably 20 nm or greater, more preferably 25 nm or greater, still more preferably 30 nm or greater, particularly preferably 35 nm or greater, most preferably 55 nm or greater. Also, the mean primary particle size of the second silica species is preferably 500 nm or smaller, more preferably 200 nm or smaller, still more preferably 100 nm or smaller, particularly preferably 70 nm or smaller. By virtue of such a mean primary particle size, fracture strength and wear resistance can be improved.

[E] Carbon black

From the viewpoints of fracture characteristics and wear resistance, the polymer composition of the present disclosure preferably contains carbon black [E] as an inorganic filler. No particular limitation is imposed on the carbon black, and examples thereof include carbon black products of a grade such as GPF, FEF, HAF, ISAF, or SAF. No particular limitation is imposed on the nitrogen adsorption specific surface area ($N_2SA$) of carbon black, and it is preferably 50 to 200 $m^2/g$, more preferably 70 to 150 $m^2/g$, from the viewpoint of fully attaining the effects of the present disclosure. The nitrogen adsorption specific surface area ($N_2SA$) is defined as a value obtained by measuring the amount of nitrogen adsorbed on the surface of carbon black through JIS K6217-2:2001 "part 2: Determination of specific surface area, Nitrogen adsorption method, Single point method." The carbon black products may be used singly or in combination of two or more species. The amount of carbon black incorporated to 100 parts by mass of conjugated diene-based polymer [A] is preferably 1 to 150 parts by mass, more preferably 5 to 120 parts by mass.

[Other fillers]

The composition of the present disclosure may contain, in addition to the aforementioned silica [D] and carbon black [E], an additional filler as an inorganic filler. Examples of the additional filler include alumina ($Al_2O_3$) such as γ-alumina or a-alumina; alumina monohydrate ($Al_2O_3 \cdot H_2O$) such as bohemite or diaspore; aluminum hydroxide [$Al(OH)_3$] such as gibbsite or bayerite; aluminum carbonate [$Al_2(CO_3)_3$], magnesium hydroxide [$Mg(OH)_2$], magnesium oxide (MgO), magnesium carbonate ($MgCO_3$), talc ($3MgO \cdot 4SiO_2 \cdot H_2O$), attapulgite ($5MgO \cdot 8SiO_2 \cdot 9H_2O$), titanium white ($TiO_2$), titanium black ($TiO_{2n-1}$), calcium oxide (CaO), calcium hydroxide [$Ca(OH)_2$], aluminum magnesium oxide ($MgO \cdot Al_2O_3$), clay ($Al_2O_3 \cdot 2SiO_2$), kaolin ($Al_2O_3 \cdot 2SiO_2 \cdot 2H_2O$), pyrophyllite ($Al_2O_3 \cdot 4SiO_2 \cdot H_2O$), bentonite ($Al_2O_3 \cdot 4SiO_2 \cdot 2H_2O$), aluminum silicate (e.g., $Al_2SiO_5$ or $Al_4 \cdot 3SiO_4 \cdot 5H_2O$), magnesium silicate (e.g., $Mg_2SiO_4$ or $MgSiO_3$), calcium silicate (e.g., $Ca_2SiO_4$), aluminum calcium silicate (e.g., $Al_2O_3 \cdot CaO \cdot 2SiO_2$), magnesium calcium silicate ($CaMgSiO_4$), calcium carbonate ($CaCO_3$), zirconium oxide ($ZrO_2$), zirconium hydroxide [$ZrO(OH)_2 \cdot nH_2O$], and zirconium carbonate [$Zr(CO_3)_2$]; and crystalline aluminosilicate salts such as various zeolites, which contains hydrogen, an alkali metal, or an alkaline earth metal for compensating electric charge.

In the polymer composition of the present disclosure, the inorganic filler (silica [D], carbon black [E], or another filler) content is preferably 30 parts by mass or more, more preferably 40 parts by mass or more, with respect to 100 parts by mass of rubber components (including conjugated diene-based polymer [A]). Also, the filler content is preferably 150 parts by mass or less, more preferably 130 parts by mass or less. When the filler content of the polymer composition satisfies the above conditions, in the case where the polymer composition of the present disclosure is used for producing tire treads, low rolling resistance, braking distance on the wet road surface, handling performance on the dry road surface, and wear resistance of the tire can be improved in a highly well-balanced manner.

[F] Other rubber components

The composition of the present disclosure may contain conjugated diene-based polymer [A] as a solo rubber component. Alternatively, so long as the effects of the present disclosure are not impaired, the composition may contain conjugated diene-based polymer [A] and a rubber component different from conjugated diene-based polymer [A] (hereinafter may also be referred to as component [F]). As component [F], there may be employed one or more diene rubbers selected from among, for example, natural rubber, isoprene rubber, butadiene rubber, emulsion-polymerized styrene-butadiene rubber, solution-polymerized styrene-butadiene rubber, butyl rubber, halogenated butyl rubber, and ethylene-propylene rubber. Among them, the composition preferably contains at least one member selected from among natural rubber, butadiene rubber, and styrene-butadiene rubber. No particular limitation is imposed on the mode of mixing component [F] with conjugated diene-based polymer [A]. For example, component [F] and conjugated diene-based polymer [A] may be mixed together during kneading by means of a Banbury mixer, a roller, or the like, which is generally carried out. Alternatively, component [F} may be added to a solution of conjugated diene-based polymer [A] after polymerization.

The component [F] content is preferably 80 mass% or less, more preferably 60 mass% or less, with respect to the total amount of the rubber components (conjugated diene-based polymer [A] and component [F]) contained in the polymer composition. As used herein, the term "rubber component" contained in the polymer composition refers to a polymer which can provide, through heat curing, a cured product exhibiting rubber elasticity. The cured product exhibits such a property that the product considerably deforms at room temperature by small force (e.g., expansion at ≥2 times by stretching at room temperature) and rapidly returns to almost the original shape when the force is removed.

In the present disclosure, from the viewpoint of further enhancing dry-grip performance, wet-grip performance, and blow-out resistance, liquid rubber may be used as a part or the entirety of the additional rubber component(s).

Examples of the liquid rubber include liquid polyisoprene (liquid IR), liquid polybutadiene (liquid BR), liquid styrene-butadiene copolymer (liquid SBR), and liquid ethylene-propylene copolymer (liquid EP). When liquid SBR is used, the weight average molecular weight thereof may be 1,000 to 100,000, preferably 2,000 to 80,000. As used herein, the term "weight average molecular weight" refers to a weight average molecular weight as reduced to polystyrene and determined through gel permeation chromatography (GPC). The liquid rubber used in the present disclosure essentially has flowability at 23°C.

[G] Thermoplastic resin

The polymer composition of the present disclosure may contain thermoplastic resin [G]. The thermoplastic resin is preferably at least one species selected from the group containing of a styrene resin, polyethylene, a C5 resin, a C9 resin, a C5/C9 resin, a dicyclopentadiene resin, an alkyl-phenolic resin, and a terpene resin, from the viewpoint of providing a cross-linked product having more excellent properties including mechanical strength, wear resistance, and anti-crack-propagation property. These thermoplastic resins may be used singly or in combination of two or more species.

The styrene resin is a polymer obtained from a styrene monomer. Among such polymers, preferred is a styrene polymer containing structural units derived from a styrene monomer in an amount of 20 mass% or more with respect to the total amount of monomer units of the styrene resin. Examples of the styrene monomer include styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, and p-chlorostyrene. Among them, the styrene monomer is preferably at least one of styrene and α-methylstyrene.

The styrene resin may be a homopolymer formed through polymerization of one single styrene monomer, or a copolymer formed through co-polymerization of two or more styrene monomers. Alternatively, the styrene resin may be a copolymer of a styrene monomer and another monomer which can co-polymerize with the styrene monomer. Examples of the above additional monomer include acrylonitriles such as acrylonitrile and (meth)acrylonitrile; unsaturated carboxylic acids such as acrylic acids and (meth)acrylic acids; unsaturated carboxylic acid esters such as methyl acrylate and methyl (meth)acrylate; dienes such as chloroprene, butadiene, and isoprene; olefins such as 1-butene and 1-pentene; and α,β-unsaturated carboxylic acid or anhydride such as maleic anhydride.

The softening point of the styrene resin is preferably 30°C or higher, more preferably 60°C or higher, still more preferably 80°C or higher. When the softening point is 30°C or higher, the effect of improving the anti-crack-propagation property of the cross-linked product tends to be easily attained. The softening point of the styrene resin is preferably 160°C or lower, more preferably 130°C or lower, still more preferably 100°C or lower. When the softening point is 160°C or lower, dispersibility of the resin is enhanced. In this case, anti-crack-propagation property, wear resistance, and breaking strength can be readily improved. Notably, in the present disclosure, the softening point of the styrene resin is determined through a method defined in JIS K 6220-1:2015 by means of a ring and ball softening point apparatus. The temperature at which a ball placed on a sample falls to a base plate by softening the sample is employed as the softening point.

As the styrene resin, there may be used a block polymer (thermoplastic elastomer) including a conjugated diene-based polymer block as a soft segment and a polystyrene block as a hard segment. Use of such a block polymer is preferred, since the effect of improving the anti-crack-propagation property can be further enhanced. Notably, in the conjugated diene-based polymer block contained in the block polymer, a part of C-C double bonds in structural units derived from the conjugated diene compound may be hydrogenated.

Examples of the conjugated diene compound forming the aforementioned conjugated diene-based polymer block include 1,3-butadiene, isoprene, 2,3-dimethyl-1,3-butadiene, 1,3-pentadiene, and 1,3-hexadiene. These conjugated diene compounds may be used singly or in combination of two or more species. Of these, at least one of 1,3-butadiene and isoprene is preferred as the conjugated diene compound. The conjugated diene unit content of the block polymer is preferably 20 mass% or more, more preferably 30 mass% or more. Also the conjugated diene unit content is preferably 80 mass% or less, more preferably 70 mass% or lower.

From the viewpoint of achieving higher breaking strength, the ratio of the polystyrene block in the aforementioned block polymer is preferably 20 mass% or more. Also, the polystyrene block content is preferably 80 mass% or less, more preferably 70 mass% or less. Notably, the polystyrene block content, conjugated diene-based polymer block content, and conjugated diene unit content of the block polymer can be calculated by corresponding integral proportions obtained by a $^1$H-NMR spectrum.

Specific examples of the block polymer include styrene-butadiene block copolymer, styrene-isoprene block copolymer, an epoxidated product of styrene-butadiene block copolymer, styrene-butadiene block copolymer, and a block copolymer in which a part of conjugated diene-based polymer blocks of a styrene-isoprene block copolymer have been hydrogenated. More specific examples include styrene-butadiene-styrene block copolymer (SBS), styrene-isoprene-styrene block copolymer (SIS), styrene-butadiene-butylene-styrene block copolymer (SBBS), an epoxidated product of styrene-butadiene styrene block copolymer, and hydrogenated products of these copolymers. Among these block polymers, from the viewpoint of high cross-linking performance, SBS and SIS (having a conjugated diene-based polymer block in which a soft segment has not been hydrogenated) and an epoxidated product of styrene-butadiene styrene block copolymer are preferably used.

Examples of the polyethylene species include low-density polyethylene (LDPE), high-density polyethylene (HDPE), and linear low-density polyethylene (LLDPE). The C5 resin is a solid polymer (C5-type synthetic petroleum resin) obtained through polymerization of a C5 fraction in the presence of a Friedel-Crafts catalyst (e.g., $AlCl_3$ or $BF_3$). Specific examples of the C5 resin include copolymers mainly formed from isoprene, cyclopentadiene, 1,3-pentadiene, 1-pentene, etc., 2-pentene-dicyclopentadiene copolymer, and a polymer mainly formed from 1,3-pentadiene.

The C9 resin is a solid polymer (C9-type synthetic petroleum resin) obtained through polymerization of a C9 fraction in the presence of a Friedel-Crafts catalyst (e.g., $AlCl_3$ or $BF_3$). Specific examples of the C9 resin include copolymers mainly formed from indene, methylindene, vinyltoluene, etc. The C5/C9 resin is a solid polymer (C5/C9-type synthetic petroleum resin) obtained through polymerization of C5 to C9 fractions in the presence of a Friedel-Crafts catalyst (e.g., $AlCl_3$ or $BF_3$). Specific examples of the C5/C9 resin include copolymers mainly formed from, for example, vinyltoluene and indene. From the viewpoint of compatibility with rubber components, the C5/C9 resin preferably has low $C\geq9$ component content. Specifically, the C5/C9 resin preferably has an amount of $C\geq9$ components in the total amount of the resin less than 50 mass%, more preferably 40 mass% or less.

The dicyclopentadiene resin is a petroleum resin obtained mainly from dicyclopentadiene present in a C5 fraction. Specific examples of the dicyclopentadiene resin include "Markarez M" series (M-890A, M-845A, M-990A, etc.) (products of Marzen Petrochemical Co., Ltd.). Examples of the alkyl-phenolic resin include alkylphenol acetylene resin such as p-tert-butylphenol acetylene resin; and alkylphenol formaldehyde resin of low polymerization degree.

The terpene resin is a solid resin prepared by polymerizing turpentine (recovered in production of rosin from pine trees) or a polymerization component isolated therefrom in the presence of a Friedel-Crafts catalyst, and examples thereof include β-pinene resin and α-pinene resin. Commercial products of the terpene resin may also be used. Examples thereof include "YS Resin" series (PX-1250, TR-105, etc.) (products of Yasuhara Chemical Co., Ltd.) and "Piccolyte" series (A115, S115, etc.) (products of Hercules).

A typical example of the terpene-aromatic compound resin is a terpene-phenolic resin. The terpene-phenolic resin may be prepared by reacting a terpene with various phenols in the presence of a Friedel-Crafts catalyst, or such a process further concomitant with condensation with formalin. No particular limitation is imposed on the raw material terpene, and monoterpene hydrocarbons such as α-pinene and limonene are preferred. A monoterpene hydrocarbon including α-pinene is more preferred, with pure α-pinene being particularly preferred. In the present disclosure, a terpene-phenolic resin having low phenolic content is preferred. The term "low phenol content" refers to the phenolic content of the total amount of the resin being less than 50 mass%, preferably 40 mass% or less. Notably, when a terpene-aromatic compound resin, in particular, a terpene-phenolic resin, is used as thermoplastic resin [G], handling performance can also be enhanced. Commercial products of the terpene-aromatic compound resin may be used. Examples of commercial products include "Tamanol 803L" and "Tamanol 901" (products of Arakawa Chemical Industries, Ltd.) and "YS Polyster (registered trademark)" series (products of Yasuhara Chemical Co., Ltd.).

The amount of the thermoplastic resin to be used is preferably 1 part by mass or more, with respect to 100 parts by mass of the rubber component(s) contained in the polymer composition. Use of the thermoplastic resin in an amount of 1 part by mass or more is suitable, since the effect of improving the wear resistance, breaking strength, and anti-crack-propagation property of the cross-linked product obtained from the polymer composition can be satisfactorily enhanced. The amount of the thermoplastic resin is more preferably 3 parts by mass or more, still more preferably 7 parts by mass or more, with respect to 100 parts by mass of the rubber component(s). From the viewpoint of maintaining characteristics of the polymer composition at suitable levels, the amount of the thermoplastic resin is preferably 50 parts by mass or less, more preferably 30 parts by mass or less, still more preferably 25 parts by mass or less, with respect to 100 parts by mass of the rubber component(s) contained in the polymer composition. Notably, these thermoplastic resins may be used singly or in combination of two or more species.

[H] Silane coupling agent

In the present disclosure, a silane coupling agent may be added with silica to further enhance dispersibility of silica. No particular limitation is imposed on the silane coupling agent used, but a sulfur-containing silane coupling agent is preferred. Examples thereof include bis(3-triethoxysilylpropyl)tetrasulfide, bis(3-triethoxysilylpropyl) disulfide, 3-trimethoxysilylpropylbenzothiazole tetrasulfide, γ-mercaptopropyltriethoxysilane, and 3-octanoylthiopropyltriethoxysilane.

The amount of the silane coupling agent to be used is preferably 1 to 20 parts by mass, with respect to 100 mass of silica. When the amount of the silane coupling agent is less than 1 part by mass, sufficient enhancement dispersibility of silica may fail to attain due to an excessively small amount. In contrast, when the amount is in excess of 20 parts by mass, processability and elongation at break may be impaired in some cases. The amount of the silane coupling agent is more preferably 5 to 15 parts by mass, with respect to 100 parts by mass of silica.

[I] Cross-linking agent

The polymer composition of the present disclosure may contain a cross-linking agent. By virtue of the presence of a cross-linking agent in the polymer composition of the present disclosure, a cross-linked product having suitably enhanced mechanical strength and wear resistance can be provided. Examples of the cross-linking agent include sulfur, sulfur halide, an organic peroxide, a quinonedioxime, an organic polyvalent amine compound, and an alkyl-phenolic resin having a methylol group. Generally, sulfur is used. The amount of the cross-linking agent to be used is preferably 0.1 to 5 parts by mass, more preferably 0.5 to 3 parts by mass, with respect to the total amount of rubber components contained in the polymer composition as 100 parts by mass.

[J] Extender oil

The polymer composition of the present disclosure may contain, as an extender oil, a process oil which is generally used for extending elastomer. No particular limitation is imposed on the method of adding the process oil. In one possible procedure, a process oil is added to a conjugated diene-based polymer solution after polymerization, and the solvent is removed from the oil-extended product, to thereby prepare an oil-extended rubber. In another possible procedure, a process oil is directly added to the polymer solution during kneading by means of a Banbury mixer, a roller, etc. Examples of preferred process oils include various oils known in the art. Specific examples include aromatic oil, paraffin oil, naphthene oil, and vegetable oil. Examples further include oils having low polycyclic aromatic compound content (i.e., low-PCA oils) such as a mild extraction solvate (MES), a treated distillate aromatic extract (TDAE), and a special residual aromatic extract (SRAE); and heavy naphthene oil. Examples of commercial products of MES, TDAE, and SRAE include Catenex SNR (heavy paraffin obtained by dewaxing a distilate with solvent) (product of Shell) as MES; Vivatec 500 (product of H&R Wasag AG) as TDAE; and NC140 (product of Japan Energy Corp.) as SRAE. The amount of process oil is preferably 10 to 100 parts by mass, with respect to the total amount of polymer components contained in the polymer composition as 100 parts by mass.

In addition to the aforementioned components, various additives generally employed in polymer compositions for producing vulcanized rubber may be incorporated into the polymer composition. Examples of such additives include an antioxidant, zinc flower, stearic acid, a softening agent, a vulcanization accelerator, a silane coupling agent, a compatibilizer, a vulcanization aid, a processing aid, and an anti-scorching agent. The amount of each additive may be appropriately determined, so long as the effects of the present disclosure are not impaired.

The polymer composition of the present disclosure can be applied, as a cross-linked product, to various rubber products, by kneading polymer components, inorganic fillers, and optional components by means of a kneader such as an open-type kneader (e.g., a roller) or a closed-type kneader (e.g., a Banbury mixer); molding; and cross-linking (vulcanizing). More specifically, the cross-linked product can be applied to, for example, tire parts such as tire tread, under tread, carcass, sidewall, and bead; sealing materials such as packings, gaskets, weather strips, and O-rings; exterior/interior coating materials for vehicles including automobiles, marine vessels, aircraft, and trains; building materials; vibration-proof rubbers for industrial machines, facilities, etc.; hoses and hose covers such as diaphragms, rollers, radiator hoses, and air hoses; belts such as power-transmission belt; linings; dust boots; materials of medical apparatus; fenders; electric wire insulating materials; and other industrial products.

According to conjugated diene-based polymer [A], a cross-linked product can be obtained, wherein the product exhibits excellent physical properties required for tires (e.g., tensile strength and wear resistance). Thus, the polymer composition containing conjugated diene-based polymer [A] can be suitably used as a material particularly for forming treads, sidewalls, or both of tires.

Production of tires may be carried out through any customary method. In one procedure, the polymer composition is kneaded by means of a kneader, and the kneaded product is formed into a sheet, which is placed at a predetermined position (e.g., outside the carcass in the case of sidewall) through a customary method, followed by performing vulcanization molding. As a result, treads or sidewalls are formed, to thereby yield a pneumatic tire.

Examples

The present disclosure will next be described in detail by way of examples, which should not be construed as limiting the disclosure thereto. Unless otherwise specified, "part(s)" and "%" in the Examples and Comparative Examples are on a mass basis. Physical properties of each polymer were measured through the following methods.

[Characteristic evaluation of polymer]

·Vinyl bond content (mol%): Determined through 400 MHz $^1$H-NMR for a polymer before hydrogenation.
·Bound styrene content (%): Determined through 400 MHz $^1$H-NMR for a polymer before hydrogenation.
·First peak mean molecular weight: Determined from a molecular weight (reduced to polystyrene) chart obtained by means of a gel permeation chromatograph (GPC, HLC-8020, product of Tosoh Corporation) for a polymer before hydrogenation. Retention time of a peak of the longest retention time in the obtained GPC curve was employed. Specific measurement conditions are as follows.

(Measurement conditions)

Column: GMH-HR-H (product of Tosoh Corporation). Two columns were connected in series.
Detector: Differential refractometer RI-8020 (product of Tosoh Corporation)
Eluent: Tetrahydrofuran
Column temperature: 40°C
Flow rate: 1.0 mL/min
Sample concentration: 10 mg/20mL

·Total weight average molecular weight (as reduced to polystyrene): Determined from the entire peak area of a GPC curve obtained by means of GPC (HLC-8020, product of Tosoh Corporation) for a polymer before hydrogenation. The measurement conditions were the same as employed above.
·Coupling ratio (mass%): Determined from the peak area ratio of a GPC curve obtained by means of GPC (HLC-8020, product of Tosoh Corporation) for a polymer before hydrogenation. The relative amount of coupling polymers each having 2 or more molecular chains was calculated.
·Hydrogenation ratio and $\alpha$: Calculated from $^1$H-NMR spectra obtained by means of a 100 MHz NMR apparatus (solvent: tetrachloroethylene).
·Polymer (A1) content (mass%): Calculated by isolating the component of the wave form of the coupling polymer having 4 or more branches in a GPC curve obtained by means of GPC (HLC-8020, product of Tosoh Corporation) for a polymer before hydrogenation.

<Synthesis of hydrogenated conjugated diene-based polymers>

[Example 1: Synthesis and physical properties of hydrogenated conjugated diene-based polymer A]

To an autoclave reactor (capacity: 50 L) with a nitrogen atmosphere, cyclohexane (25,900 g), tetrahydrofuran

(65 g), styrene (370 g), 1,3-butadiene (3,219 g), and piperidine (63 mmol) were added. The temperature of the contents of the reactor was adjusted to 42°C, and then a solution of n-butyllithium (86 mmol) in cyclohexane was added thereto, to thereby initiate polymerization. Polymerization was performed under adiabatic conditions. When the polymerization conversion was confirmed to be 99%, 1,3-butadiene (111 g) was further added, and further polymerization was performed for 3 minutes, to thereby yield a reaction mixture containing a polymer of interest. To the thus-obtained reaction mixture, tetrachlorosilicon (10 mmol) was added, and the mixture was caused to react for 5 minutes.

Subsequently, the reaction mixture heated to 80°C or higher, and hydrogen was added to the reaction system. Then, diethylaluminum chloride (1.64 g), bis(η-5-cyclopentadienyl)titanium (furfryloxy)chloride (3.67 g), and n-butyllithium (1.67 g) were added, and hydrogenation was performed while the hydrogen pressure was maintained at 1.0 MPa. After hydrogenation, further reaction was performed by supplying hydrogen to the reaction system until the cumulative amount of hydrogen reached a level of interest, while the hydrogen pressure was maintained at 0.7 MPa or higher. Then, the reaction mixture was returned to ambient temperature and pressure, and removed from the reaction container, to thereby yield a polymer solution. The thus-obtained polymer solution was subjected to steam stripping for removal of the solvent, and the resultant matter was dried by means of a heat roller whose temperature was controlled at 130°C, to thereby yield hydrogenated conjugated diene-based polymer A. Table 1 shows formulations for producing hydrogenated conjugated diene-based polymer A, and Table 3 shows properties including physical properties of the obtained hydrogenated conjugated diene-based polymer A.

[Examples 2, 4 to 11, and 14 to 17, and Comparative Examples 1 to 3: Synthesis and physical properties of hydrogenated conjugated diene-based polymers B, D to K, N to Q, and R to T]

The procedure of Example 1 was repeated, except that the formulations of polymerization were changed to those shown in Tables 1 and 2, and the hydrogenation ratio was changed to the values shown in Tables 3 and 4, to thereby yield hydrogenated conjugated diene-based polymers B, D to K, N to Q, and R to T. In Example 4 and Comparative Example 1, no initiating terminal modifier was used. Tables 3 and 4 show properties including physical properties of the obtained hydrogenated conjugated diene-based polymers B, D to K, N to Q, and R to T.

[Example 3: Synthesis and physical properties of hydrogenated conjugated diene-based polymer C]

To an autoclave reactor (capacity: 50 L) with a nitrogen atmosphere, cyclohexane (25,900 g), tetrahydrofuran (65 g), styrene (370 g), 1,3-butadiene (3,219 g), and piperidine (63 mmol) were added. The temperature of the contents of the reactor was adjusted to 42°C, and then a solution of n-butyllithium (86 mmol) in cyclohexane was added thereto, to thereby initiate polymerization. Polymerization was performed under adiabatic conditions. When the polymerization conversion was confirmed to be 99%, 1,3-butadiene (111 g) was further added, and further polymerization was performed for 3 minutes, to thereby yield a reaction mixture containing a polymer of interest. To the thus-obtained reaction mixture, tetrachlorosilicon (10 mmol) was added, and the mixture was caused to react for 5 minutes. Further, N,N-dimethylaminopropyltriethoxysilane (28 mmol) was added, and the mixture was caused to react for 15 minutes.

Subsequently, the reaction mixture heated to 80°C or higher, and hydrogen was added to the reaction system. Then, diethylaluminum chloride (1.64 g), bis(η-5-cyclopentadienyl)titanium (furfryloxy)chloride (3.67 g), and n-butyllithium (1.67 g) were added, and hydrogenation was performed while the hydrogen pressure was maintained at 1.0 MPa. After hydrogenation, further reaction was performed by supplying hydrogen to the reaction system until the cumulative amount of hydrogen reached a level of interest, while the hydrogen pressure was maintained at 0.7 MPa or higher. Then, the reaction mixture was returned to ambient temperature and pressure, and removed from the reaction container, to thereby yield a polymer solution. The thus-obtained polymer solution was subjected to steam stripping for removal of the solvent, and the resultant matter was dried by means of a heat roller whose temperature was controlled at 130°C, to thereby yield hydrogenated conjugated diene-based polymer C. Table 1 shows formulations for producing hydrogenated conjugated diene-based polymer C, and Table 3 shows properties including physical properties of the obtained hydrogenated conjugated diene-based polymer C.

[Example 12 and Comparative Example 4: Synthesis and physical properties of hydrogenated conjugated diene-based polymers L and U]

The procedure of Example 1 was repeated, except that the formulations of polymerization were changed to those shown in Table 2, to thereby yield hydrogenated conjugated diene-based polymers L and U. In Comparative Example 4, no initiating terminal modifier was used. Table 4 shows properties including physical properties of the obtained products of hydrogenated conjugated diene-based polymer (L and U).

[Example 13: Synthesis and physical properties of hydrogenated conjugated diene-based polymer M]

To an autoclave reactor (capacity: 50 L) with a nitrogen atmosphere, cyclohexane (25,900 g), tetrahydrofuran (65 g), potassium dodecylbenzenesulfonate (0.74 g), styrene (740 g), 1,3-butadiene (2,849 g), and piperidine (63 mmol) were added. The temperature of the contents of the reactor was adjusted to 42°C, and then a solution of n-butyllithium (43 mmol) in cyclohexane was added thereto, to thereby initiate polymerization. Polymerization was performed under adiabatic conditions. When the polymerization conversion was confirmed to be 99%, 1,3-butadiene (111 g) was further added, and further polymerization was performed for 3 minutes, to thereby yield a reaction mixture containing a polymer of interest. To the thus-obtained reaction mixture, tetrachlorosilicon (2.6 mmol) was added, and the mixture was caused to react for 5 minutes. Further, N,N-dimethylaminopropyltriethoxysilane (24 mmol) was added, and the mixture was caused to react for 15 minutes.

Subsequently, the reaction mixture heated to 80°C or higher, and hydrogen was added to the reaction system. Then, diethylaluminum chloride (1.64 g), bis(η-5-cyclopentadienyl)titanium (furfryloxy)chloride (3.67 g), and n-butyllithium (1.67 g) were added, and hydrogenation was performed while the hydrogen pressure was maintained at 1.0 MPa. After hydrogenation, further reaction was performed by supplying hydrogen to the reaction system until the cumulative amount of hydrogen reached a level of interest, while the hydrogen pressure was maintained at 0.7 MPa or higher. Then, the reaction mixture was returned to ambient temperature and pressure, and removed from the reaction container, to thereby yield a polymer solution. The thus-obtained polymer solution was subjected to steam stripping for removal of the solvent, and the resultant matter was dried by means of a heat roller whose temperature was controlled at 130°C, to thereby yield hydrogenated conjugated diene-based polymer M. Table 2 shows formulations for producing hydrogenated conjugated diene-based polymer M, and Table 4 shows properties including physical properties of the obtained hydrogenated conjugated diene-based polymer M.

[Table 1]

| | | Examples | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Type of hydrogenated conjugated diene-based polymer | | A | B | C | D | E | F | G | H | I | J | K |
| Formulations of polymerization solvent | | | | | | | | | | | | |
| : cyclohexane | (g) | 25900 | 25900 | 25900 | 25900 | 25900 | 25900 | 25900 | 25900 | 25900 | 25900 | 25900 |
| vinyl content adjusting agent | | | | | | | | | | | | |
| : tetrahydrofuran | (g) | 65 | 65 | 65 | 65 | 65 | 65 | 65 | 65 | 26 | 65 | 65 |
| V-1 | (g) | - | - | - | | | - | - | - | - | - | - |
| monomer | | | | | | | | | | | | |
| : styrene | (g) | 370 | 370 | 370 | 370 | 370 | 370 | 370 | 925 | 370 | 370 | 370 |
| : butadiene | (g) | 3219 | 3219 | 3219 | 3219 | 3219 | 3219 | 3219 | 2664 | 3219 | 3219 | 3219 |
| : added butadiene | (g) | 111 | 111 | 111 | 111 | 111 | 111 | 111 | 111 | 111 | 111 | 111 |
| polymerization initiator | | | | | | | | | | | | |
| : n-butyllithium (initiating terminal modifier) | (mmol) | 86 | 86 | 86 | 86 | 86 | 86 | 86 | 86 | 86 | 66 | 43 |
| : piperidine | (mmol) | 63 | - | 63 | | 63 | 63 | 63 | 63 | 63 | 48 | 32 |
| : INI-1 | (mmol) | - | 63 | - | | | - | - | - | - | - | - |
| terminal modifier | | | | | | | | | | | | |
| : Mod-1 | (mmol) | - | - | 28 | | | | - | | | | - |
| coupling agent | | | | | | | | | | | | |
| tetrachlorosilicon | (mmol) | 10 | 10 | 10 | | | 86 | 10 | 10 | 10 | 10 | 2.6 |
| : Mod-2 | (mmol) | - | - | - | 10 | 10 | - | - | - | - | - | - |

[Table 2]

| | | Examples | | | | | | Comparative Examples | | | |
|---|---|---|---|---|---|---|---|---|---|---|---|
| | | 12 | 13 | 14 | 15 | 16 | 17 | 1 | 2 | 3 | 4 |
| Type of hydrogenated conjugated diene-based polymer | | L | M | N | O | P | Q | R | S | T | U |
| Formulations of polymerization solvent | | | | | | | | | | | |
| : cyclohexane | (g) | 25900 | 25900 | 25900 | 25900 | 25900 | 25900 | 25900 | 25900 | 25900 | 25900 |
| vinyl content adjusting agent | | | | | | | | | | | |
| : tetrahydrofuran | (g) | 65 | 65 | 65 | 389 | 1684 | 13 | 65 | 65 | 65 | 65 |
| :V-1 | (g) | - | 074 | | | | | - | | | |
| monomer | | | | | | | | | | | |
| : styrene | (g) | 370 | 740 | 1480 | 370 | 370 | 370 | 370 | 370 | 370 | 370 |
| : butadiene | (g) | 3219 | 2849 | 2109 | 3219 | 3219 | 3219 | 3219 | 3219 | 3219 | 3219 |
| : added butadiene | (g) | 111 | 111 | 111 | 111 | 111 | 111 | 111 | 111 | 111 | 111 |
| polymerization initiator | | | | | | | | | | | |
| : n-butyllithium (initiating terminal modifier) | (mmol) | 43 | 43 | 86 | 86 | 86 | 86 | 86 | 86 | 86 | 43 |
| : piperidine | (mmol) | 32 | 32 | 63 | 63 | 63 | 63 | - | 63 | 63 | |
| : INI-1 | (mmol) | | | | | | | | | | |
| terminal modifier | | | | | | | | | | | |
| : Mod-1 | (mmol) | 24 | 24 | | | | | | | | 22 |
| coupling agent | | | | | | | | | | | |
| : tetrachlorosilicon | (mmol) | 2.6 | 2.6 | 10 | 10 | 10 | 10 | 10 | 16 | 0.86 | 2.6 |
| : Mod-2 | (mmol) | | | | | | | | | | |

In Tables 1 and 2, the symbol "-" refers to no use of a compound shown in a relevant column. Abbreviations of the vinyl content adjusting agent, initiating terminal modifier, terminal modifier, and coupling agent are as follows.

V-1: Potassium dodecylbenzenesulfonate
INI-1: N-t-Butyldimethylsilyl-4-pipeazine
Mod-1: N,N-Dimethylaminopropyltriethoxysilane
Mod-2: Compound represented by formula (Mod-2)

[F14]

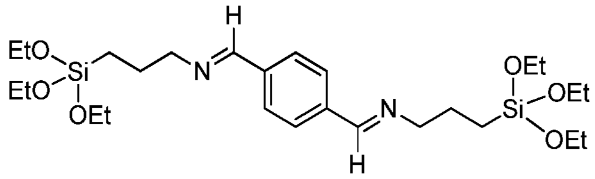

(Mod-2)

[Table 3]

| Physical properties of polymer | Examples | | | | | | | | | | |
|---|---|---|---|---|---|---|---|---|---|---|---|
| | 1 | 2 | 3 | 4 | 5 | 6 | 7 | 8 | 9 | 10 | 11 |
| Types of polymer | A | B | C | D | E | F | G | H | I | J | K |
| Bound styrene content (wt%) | 10 | 10 | 10 | 10 | 10 | 10 | 10 | 25 | 10 | 10 | 10 |
| Vinyl bond content (mol%) | 34 | 34 | 34 | 34 | 34 | 34 | 34 | 34 | 27 | 34 | 34 |
| 1st peak molecular weight ($\times 10^4$) | 10 | 10 | 10 | 10 | 10 | 10 | 10 | 10 | 10 | 13 | 20 |
| Total weight average molecular weight ($\times 10^4$) | 35 | 35 | 35 | 35 | 35 | 20 | 35 | 35 | 35 | 40 | 35 |
| Coupling ratio (wt%) | 60 | 60 | 60 | 60 | 60 | 50 | 60 | 60 | 60 | 60 | 30 |
| Hydrogenation ratio (%) | 88 | 88 | 88 | 88 | 88 | 88 | 80 | 88 | 88 | 88 | 88 |
| $\alpha$ | 0.88 | 0.88 | 0.88 | 0.88 | 0.88 | 0.88 | 0.80 | 0.88 | 0.88 | 0.88 | 0.88 |
| Polymer (A1) content (wt%) | 57 | 57 | 57 | 57 | 57 | 48 | 57 | 57 | 57 | 57 | 29 |

[Table 4]

| Physical properties of polymer | Examples | | | | | | Comparative Examples | | | |
|---|---|---|---|---|---|---|---|---|---|---|
| | 12 | 13 | 14 | 15 | 16 | 17 | 1 | 2 | 3 | 4 |
| Types of polymer | L | M | N | O | P | Q | R | S | T | U |
| Bound styrene content (wt%) | 10 | 20 | 40 | 10 | 10 | 10 | 10 | 10 | 10 | 10 |
| Vinyl bond content (mol%) | 34 | 34 | 34 | 55 | 78 | 20 | 34 | 34 | 34 | 34 |
| 1st peak molecular weight ($\times 10^4$) | 20 | 20 | 10 | 10 | 10 | 10 | 10 | 10 | 10 | 20 |
| Total weight average molecular weight ($\times 10^4$) | 35 | 35 | 35 | 35 | 35 | 35 | 35 | 40 | 12 | 35 |
| Coupling ratio (wt%) | 30 | 30 | 60 | 60 | 60 | 60 | 60 | 90 | 5 | 30 |

(continued)

| Physical properties of polymer | Examples | | | | | | Comparative Examples | | | |
|---|---|---|---|---|---|---|---|---|---|---|
| | 12 | 13 | 14 | 15 | 16 | 17 | 1 | 2 | 3 | 4 |
| Hydrogenation ratio (%) | 88 | 85 | 88 | 88 | 88 | 88 | 88 | 88 | 88 | 91 |
| α | 0.88 | 0.85 | 0.88 | 0.88 | 0.88 | 0.88 | 0.88 | 0.88 | 0.88 | 0.91 |
| Polymer (A1) content (wt%) | 29 | 28 | 57 | 57 | 57 | 57 | 57 | 87 | 4 | 29 |

<Production of polymer compositions and cross-linked products>

Each of the hydrogenated conjugated diene-based polymers A to Q, and R to U obtained in the above production processes was mixed with components at formulations shown in Table 5, and the mixture was kneaded, to thereby provide a polymer composition. The kneading procedure is as follows. Specifically, a first kneading step was performed by means of a plastomill (capacity: 250 mL) equipped with a temperature controller. In the first kneading step, each of the hydrogenated conjugated diene-based polymers (A to Q, and R to U), silica, carbon black, a silane coupling agent, an extender oil, stearic acid, zinc oxide, and an antioxidant were kneaded at a filling ratio of 72% and a rotation speed of 60 rpm, to thereby provide a mixture as polymer composition A. Next, a second kneading step was performed. Specifically, the above obtained mixture was cooled to room temperature, and a vulcanization accelerator and sulfur were added thereto. The resultant mixture was kneaded, to thereby provide polymer composition B. The thus-obtained polymer composition B was molded and vulcanized by means of a vulcanization press machine at 160°C for a predetermined time, to thereby provide a cross-linked product (vulcanized rubber). Solution viscosity, processability, cold flow, tensile strength, and wear resistance were assessed through the following procedures. Tables 6 and 7 shows the results.

(1) Solution viscosity

Each polymer (29 g) was dissolved in cyclohexane (171 g), and the solution was used as a measurement sample. Solution viscosity was measured at 60°C by means of a viscometer TVB-10 (product of Toki Sangyo). Notably, the lower the solution viscosity, the higher the flowability of the polymer solution. Such conditions are suitable, since transfer of the polymer solution via a pipe or to a container can be carried out smoothly, and diffusion of hydrogen in a polymer solution during hydrogenation can be enhanced. As a result, the time of hydrogenation can be shortened, whereby sufficient productivity can be secured. Based on the solution viscosity values obtained, solution viscosity was assessed with the following ratings A to D.

A (remarkably excellent): <1000 mP·s
B (excellent): ≥1,000 mP·s and <2,000 mP·s
C (acceptable level) : ≥2,000 mP·s and <3,000 mP·s
D (failure) : ≥3,000 mP·s

(2) Mooney viscosity

The Mooney viscosity of a polymer sample was measured by use of an L rotor in accordance with JIS K6300 under the following conditions (preheating time: 1 minute, rotor operation time: 4 minutes, and temperature 100°C). Mooney viscosity was evaluated as an index with respect to the Mooney viscosity of Comparative Example 1 as a standard. The smaller the value, the lower the Mooney viscosity (i.e., the more excellent the processability). Based on the Mooney viscosity values obtained, Mooney viscosity was assessed with the following ratings A to D.

A: <70
B: ≥70 and <85
C: ≥85 and <100
D: ≥100

(3) Cold flow (C/F)

A polymer sample was extruded through a 1/4-inch orifice at 70°C and a pressure of 3.5 lb/in$^2$, whereby cold flow was measured. In order to ensure a steady state, the extrusion rate was measured after the polymer was allowed to stand for 10 minutes. The cold flow was obtained as a value (g/min). Notably, the smaller the cold flow value, the

more excellent the shape (storage) stability (i.e., the more excellent the processability). Based on the cold flow values obtained, cold flow was assessed with the following ratings A to D.

A: <0.1 g/min
B: <0.2 g/min and ≥0.1 g/min
C: <0.3 g/min and ≥0.2 g/min
D: ≥0.3 g/min

(4) Tensile strength

A cross-linked product sample was subjected to a tensile test in accordance with JISK6251: 2010. In the test, the test sample was a dumbbell No. 3 sample, and tensile stress at break (TB) and elongation at break (EB) were measured at room temperature. The greater the TB and EB, the greater the breaking strength (i.e., the more excellent the mechanical strength of the material). Tensile strength was assessed on the basis of TB values, and evaluated as an index with respect to the tensile strength of Comparative Example 1 as a standard. The greater the value, the greater the tensile strength (i.e., the more excellent the mechanical strength). Based on the tensile strength values obtained, tensile strength was assessed with the following ratings A to D.

A: ≥110
B: ≥100 and <110
C: ≥80 and <100
D: <80

(5) Wear resistance

Wear amount of a cross-linked product sample was measured by means of a Lambourn abrasion tester (product of Shimada Giken) in accordance with JIS K6264-2: 2005 at 50°C and a slip ratio of 15%. The wear amount was evaluated as an index with respect to the wear amount of Comparative Example 1 as a standard. The smaller the value, the smaller the wear amount (i.e., the more excellent the wear resistance). Based on the amount of wear obtained, wear resistance was assessed with the following ratings A to D.

A: <90
B: <95 and ≥90
C: <100 and ≥95
D: ≥100

[Table 5]

| Production peocesses | (phr) |
|---|---|
| Hydrogenated conjugated diene-based polymer | 100 |
| Silica *1) | 38 |
| Carbon black *2) | 37 |
| Silica coupling agent *3) | 3.2 |
| Extender oil *4) | 34 |
| Stearic acid | 2.0 |
| Zinc oxide | 3.0 |
| Antioxidant *5) | 1.0 |
| A vulcanization accelerator CZ *6) | 1.8 |
| A vulcanization accelerator D *7) | 1.5 |

(continued)

| Production peocesses | (phr) |
|---|---|
| Suiter | 1.5 |
| *1) product of Rhodia ZEOSIL 1165MP<br>*2) product of TOKAI CARBON CO., LTD Seast3<br>*3) product of Evonik Si75<br>*4) product of ENEOS Corporation Process oil T-DAE<br>*5) product of SEIKO CHEMICAL CO., LTD OZONONE 6C<br>*6) product of OUCHI SHINKO CHEMICAL INDUSTRIAL CO., LTD Nocceler CZ<br>*7) product of OUCHI SHINKO CHEMICAL INDUSTRIAL CO., LTD Nocceler D | |

[Table 6]

| Characteristic evaluation | Examples | | | | | | | | | | |
|---|---|---|---|---|---|---|---|---|---|---|---|
| | 1 | 2 | 3 | 4 | 5 | 6 | 7 | 8 | 9 | 10 | 11 |
| Types of polymer | A | B | C | D | E | F | G | H | I | J | K |
| Solution viscosity | B | B | B | B | B | A | A | B | C | C | C |
| Mooney viscosity | B | C | C | B | B | A | B | C | B | B | B |
| Cold flow | B | A | B | B | B | C | C | B | B | A | C |
| Tensile strength | B | B | A | B | A | C | C | A | B | A | B |
| Wear resistance | B | A | A | A | A | C | C | B | A | B | A |

[Table 7]

| Characteristic evaluation | Examples | | | | | | Comparative Examples | | | |
|---|---|---|---|---|---|---|---|---|---|---|
| | 12 | 13 | 14 | 15 | 16 | 17 | 1 | 2 | 3 | 4 |
| Types of polymer | L | M | N | O | P | Q | R | S | T | U |
| Solution viscosity | C | C | B | A | A | C | B | D | A | C |
| Mooney viscosity | B | B | C | B | B | C | B | C | B | C |
| Cold flow | C | B | A | C | C | B | C | A | D | D |
| Tensile strength | A | A | A | B | C | A | C | B | D | B |
| Wear resistance | A | A | C | B | B | A | D | B | D | B |

As shown in Tables 6 and 7, polymer compositions of Examples 1 to 17 were found to achieve improved solution viscosity, Mooney viscosity, cold flow characteristic, and tensile strength wear resistance of a cross-linked product in favorable balance. Among them, the polymer compositions of Examples 3, 5, 12, 13, and 17 were evaluated as "A" in terms of tensile strength wear resistance of a cross-linked product. Further, the polymer compositions of Examples 5, 12, and 13 were evaluated as "B" in processability based on Mooney viscosity. Thus, these properties were attained in good balance.

In contrast, the polymer composition of Comparative Example 1, having a terminal of a polymer chain of the branched polymer which had not been modified with an initiating terminal modifier or terminal modifier (b1), was evaluated as "D" in terms of wear resistance of the cross-linked product. The polymer composition of Comparative Example 2, having a polymer (A1) content of the hydrogenated conjugated diene-based polymer as high as 87 mass%, was evaluated as "D" in terms of solution viscosity. In addition, the polymer composition of Comparative Example 3, having a smaller polymer (A1) content the hydrogenated conjugated diene-based polymer, was evaluated as "D" in terms of cold flow characteristic, and tensile strength and wear resistance of the cross-linked product. The polymer composition of Comparative Example 4, having a terminal of a polymer chain of the branched polymer which had not been modified with an initiating terminal modifier or terminal modifier (b), was evaluated as "D" in terms of cold flow characteristic, although the tensile strength and wear resistance of the cross-linked product were improved. Thus, all of the polymer compositions of Comparative Examples 1 to 4 exhibited poorer performance than that attained in the Examples.

## Claims

1. A conjugated diene-based polymer which has a value $\alpha$ defined by the following mathematical expression (i):

$$\alpha=(p+(0.5\times r))/(p+q+(0.5\times r)+s) \quad \cdots \quad (i);$$

of 0.65 to 0.97, wherein p, q, r, and s represent compositional ratios (mole ratios) of the structural units represented by the following formulas (1) to (4), respectively:

[F1]

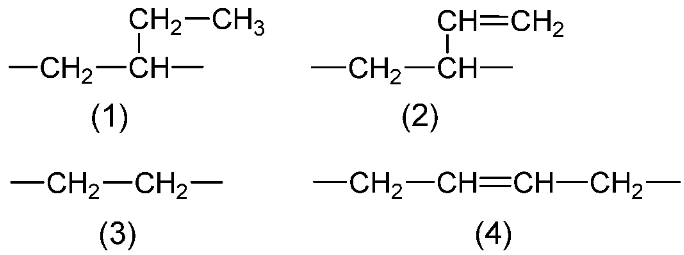

(1) (2) (3) (4) ;

in the polymer, wherein

the conjugated diene-based polymer comprises, in an amount of 25 to 75 mass%, polymer (A1) which comprises a multi-branched structure having 4 or more molecular chains; and
the polymer (A1) has a functional group comprising at least one element selected from the group consisting of nitrogen, oxygen, and sulfur at one or both of a terminal and a branching point of the polymer (A1).

2. The conjugated diene-based polymer according to claim 1, which comprises a structural unit derived from an aromatic vinyl compound.

3. The conjugated diene-based polymer according to claim 2, which comprises the structural unit derived from the aromatic vinyl compound in a relative amount of more than 0 mass% and 45 mass% or less.

4. The conjugated diene-based polymer according to any one of claims 1 to 3, wherein

the polymer (A1) comprises a structure in which 4 or more molecular chains are bonded to a moiety derived from a coupling agent; and
the coupling agent comprises at least one element selected from the group consisting of nitrogen, oxygen, sulfur, and silicon.

5. The conjugated diene-based polymer according to any one of claims 1 to 4, wherein the polymer (A1) has a secondary or tertiary amino group at a terminal thereof.

6. The conjugated diene-based polymer according to any one of claims 1 to 5, which further comprises polymer (A2) of a linear-chain form or a branched form having 3 or less branches.

7. The conjugated diene-based polymer according to claim 6, wherein the polymer (A2) comprises a linear-chain polymer which has a secondary or tertiary amino group at one terminal, and a functional group comprising at least one element selected from the group consisting of nitrogen, phosphorus, oxygen, sulfur, and silicon at the other terminal.

8. A method for producing a conjugated diene-based polymer, the method comprising:

a polymerization step of polymerizing a monomer comprising a conjugated diene compound in the presence of a metallic compound comprising an alkali metal or an alkaline earth metal, to thereby yield conjugated diene-based polymer (I) having an active terminal;
a reaction step of reacting the conjugated diene-based polymer (I) with compound [B] having 4 or more functional

groups which can react with the active terminal, to thereby yield conjugated diene-based polymer (II); and
a hydrogenation step of performing hydrogenation, so that the hydrogenation ratio of structural units derived from the conjugated diene compound comprised in the conjugated diene-based polymer (II) is adjusted to 65 to 97%, wherein
the reaction step is a step of reacting the conjugated diene-based polymer (I) with the compound [B], so that the conjugated diene-based polymer (II) contains a polymer comprising a multi-branched structure having 4 or more molecular chains in an amount of 25 to 75 mass%; and
at least one species of the metallic compound and the compound [B] comprises at least one element selected from the group consisting of nitrogen, oxygen, and sulfur.

**9.** The method for producing a conjugated diene-based polymer according to claim 8, wherein the metallic compound is a metal amide compound comprising an alkali metal or an alkaline earth metal.

**10.** The method for producing a conjugated diene-based polymer according to claim 8 or 9, wherein

the conjugated diene-based polymer (II) further comprises a polymer of a linear-chain form or a branched form having 3 or less branches;
after the reaction step and before the hydrogenation step, the production method further comprises a step of forming a polymer of a linear-chain form or a branched form having 3 or less branches which polymer has a functional group comprising at least one element selected from the group consisting of nitrogen, phosphorus, oxygen, sulfur, and silicon, by reacting a compound which comprises at least one element selected from the group consisting of nitrogen, phosphorus, oxygen, sulfur, and silicon and which can react with the active terminal, with a linear-chain polymer comprised in the conjugated diene-based polymer (II).

**11.** A polymer composition comprising the conjugated diene-based polymer as recited in any one of claims 1 to 7 or the conjugated diene-based polymer produced through the production method as recited in any one of claims 8 to 10; and an inorganic filler.

**12.** A cross-linked product formed by cross-linking the polymer composition as recited in claim 11.

**13.** A tire comprising a tread and a sidewall, wherein one or both of the tread and the sidewall is formed by use of the polymer composition as recited in claim 11.

**INTERNATIONAL SEARCH REPORT**

International application No. **PCT/JP2022/011366**

**A. CLASSIFICATION OF SUBJECT MATTER**

***C08F 8/04***(2006.01)i; ***B60C 1/00***(2006.01)i; ***C08F 8/30***(2006.01)i; ***C08F 36/06***(2006.01)i; ***C08K 3/013***(2018.01)i; ***C08L 9/00***(2006.01)i
FI: C08F8/04; C08F36/06; C08F8/30; C08L9/00; C08K3/013; B60C1/00 A; B60C1/00 B

According to International Patent Classification (IPC) or to both national classification and IPC

**B. FIELDS SEARCHED**

Minimum documentation searched (classification system followed by classification symbols)

C08F6/00-246/00; 301/00; B60C1/00; C08K3/013; C08L9/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2014/126184 A1 (JSR CORP.) 21 August 2014 (2014-08-21) claims 1, 4, 6, paragraphs [0039], [0063]-[0067], [0077]-[0102], [0144], [0166], [0171], [0225], [0231], [0236], [0237], tables 1, 2, example 3A | 1-13 |
| X | JP 2000-053706 A (JSR CORP.) 22 February 2000 (2000-02-22) claim 2, paragraphs [0005], [0015], [0069], [0073]-[0078], tables 1, 2, example 15 | 1-3, 5-9, 11-13 |
| A | | 4, 10 |
| X | WO 2010/140659 A1 (KURARAY CO., LTD.) 09 December 2010 (2010-12-09) claim 1, paragraphs [0020], [0026], [0045], [0054], example 3 | 1-4, 6, 8, 11-12 |
| A | | 5, 7, 9-10, 13 |
| A | JP 08-245839 A (ASAHI CHEM. IND. CO., LTD.) 24 September 1996 (1996-09-24) entire text | 1-13 |
| A | WO 2018/164053 A1 (ASAHI KASEI KK) 13 September 2018 (2018-09-13) entire text | 1-13 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 May 2022** | **31 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
PCT/JP2022/011366

C. DOCUMENTS CONSIDERED TO BE RELEVANT

| Category* | Citation of document, with indication, where appropriate, of the relevant passages | Relevant to claim No. |
|---|---|---|
| A | WO 2018/199280 A1 (JSR CORP.) 01 November 2018 (2018-11-01) entire text | 1-13 |
| A | JP 2004-513087 A (FMC CORP.) 30 April 2004 (2004-04-30) entire text | 1-13 |

Form PCT/ISA/210 (second sheet) (January 2015)

**INTERNATIONAL SEARCH REPORT**
**Information on patent family members**

International application No.
**PCT/JP2022/011366**

| Patent document cited in search report | Publication date (day/month/year) | Patent family member(s) | Publication date (day/month/year) |
|---|---|---|---|
| WO 2014/126184 A1 | 21 August 2014 | US 2015/0368387 A1<br>claims 1, 4, 6, paragraphs [0042], [0063]-[0067], [0077]-[0103], [0145], [0178], [0183], [0248], [0254], tables 1, 2, example 3A<br>EP 2957572 A1<br>CN 104995214 A<br>KR 10-2015-0119865 A | |
| JP 2000-053706 A | 22 February 2000 | (Family: none) | |
| WO 2010/140659 A1 | 09 December 2010 | US 2012/0136114 A1<br>claim 1, paragraphs [0050], [0063], [0095], [0115], [0116], example 3<br>US 2016/0115269 A1<br>EP 2439218 A1<br>CN 102459377 A<br>KR 10-2012-0027287 A | |
| JP 08-245839 A | 24 September 1996 | (Family: none) | |
| WO 2018/164053 A1 | 13 September 2018 | US 2020/0031975 A1<br>entire text<br>EP 3594251 A1<br>KR 10-2019-0095481 A<br>CN 110325556 A<br>KR 10-2021-0066021 A<br>TW 201837063 A | |
| WO 2018/199280 A1 | 01 November 2018 | TW 201839042 A | |
| JP 2004-513087 A | 30 April 2004 | US 6610859 B1<br>entire text<br>US 6121474 A<br>US 2003/0139563 A1<br>US 2003/0162978 A1<br>GB 2382076 A<br>GB 2413554 A<br>WO 2002/024764 A1<br>WO 2000/050479 A1<br>TW 496878 B | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021041264 A
- WO 2008123164 A
- JP 11349632 A
- WO 2017221943 A
- WO 2014133097 A
- JP 63004841 B
- JP 1037970 B
- JP 2011140613 A